# EUROPÄISCHE PATENTSCHRIFT

(11) **EP 3 413 150 B1**
(45) Veröffentlichungstag und Bekanntmachung des Hinweises auf die Patenterteilung: **07.08.2024**
(21) Anmeldenummer: 18170568.2
(22) Anmeldetag: 03.05.2018
(51) Int. Cl.: G05B 19/4065, B23Q 17/24, B23Q 17/09

(54) **VORRICHTUNG UND VERFAHREN ZUM MESSEN UND KONTROLLIEREN EINES DREHANTREIBBAREN WERKZEUGS IN EINER WERKZEUGMASCHINE**
DEVICE AND METHOD FOR MEASURING AND CONTROLLING A ROTATIONALLY DRIVABLE TOOL IN A MACHINE TOOL
DISPOSITIF ET PROCÉDÉ DE MESURE ET DE CONTRÔLE D'UN OUTIL POUVANT ÊTRE ENTRAÎNÉ EN ROTATION DANS UNE MACHINE-OUTIL

(30) Priorität: 09.06.2017 DE 102017005488
(43) Veröffentlichungstag der Anmeldung: 12.12.2018
(73) Patentinhaber: Blum-Novotest GmbH, 88287 Grünkraut (DE)
(72) Erfinder: Mörsch, Norbert, 88239 Wangen (DE); Riedter, Bruno, 88250 Weingarten (DE); Häfele, Stefan, 88069 Tettnang (DE); Maier, Gregor, 88284 Mochenwangen (DE)
(74) Vertreter: Schmidt, Steffen J.

(56) Entgegenhaltungen:
- WO-A1-03/018251
- WO-A1-2008/135744
- DE-A1- 102007 028 228
- DE-A1- 102008 017 349
- DE-A1- 102013 011 307
- DE-A1- 3 905 949
- MAXIMILIAN HAUSKE: "Signalverarbeitung für optoelektronische Sensoren", 1 January 2012 (2012-01-01), XP055389122, Retrieved from the Internet <URL:https://publikationen.bibliothek.kit.edu/1000028706/2171986> [retrieved on 20170707]

## Beschreibung

### Hintergrund

Bei Werkzeugmaschinen verwendete, drehantreibbare Werkzeuge weisen oftmals Rundlauffehler oder Beschädigungen auf, welche bereits vor dem Einsatz in der Werkzeugmaschine vorhanden sein oder auch nachträglich durch Abnutzung derselben entstehen können.

Rundlauffehler oder Beschädigungen des drehantreibbaren Werkzeugs können zu Belastungen der Werkzeuge führen, die diese bei Bearbeitung beschädigen oder zerstören. Bei Bearbeitungsvorgängen mit geringen Toleranzen können Rundlauffehler von weniger als 0,01 mm bereits zu einer fehlerhaften Bearbeitung und damit zu Ausschuss im Produktionsprozess führen.

Um mögliche Rundlauffehler oder Beschädigungen des drehantreibbaren Werkzeugs zu erkennen, ist ein möglicher Ansatz, das in der Werkzeugmaschine eingespannte drehantreibbare Werkzeug in Rotation zu versetzen und mittels eines optischen Messsystems, beispielsweise in Form einer Laser-Lichtschranke, zu erfassen. Dabei wird durch eine durch das drehantreibbare Werkzeug hervorgerufene Abschattung in einem Lichtstrahl der Laser-Lichtschranke ein Signal erzeugt, welches verarbeitet wird, um eine Kenngröße, beispielsweise einen Radius des drehantreibbaren Werkzeugs zu bestimmen und mit einem Referenzradius zu vergleichen. Basierend auf dem Vergleich kann auf einen möglichen Rundlauffehler geschlossen werden.

Dieser Ansatz setzt voraus, dass die durch das drehantreibbare Werkzeug erzeugte Abschattung in dem Lichtstrahl lediglich von dem drehanstreibbaren Werkzeug erzeugt wurde. Dies birgt den Nachteil, dass, vor allem wenn sich das drehantreibbare Werkzeug im Einsatz befindet, beispielsweise Späne, Reinigungs- und/oder Kühlflüssigkeit Einfluss auf die erzeugte Abschattung des Lichtstrahls haben können, so dass das resultierende Signal zum Beispiel einen falschen Radius wiedergibt. Ein weiterer Einflussfaktor sind die durch das Betreiben der Werkzeugmaschine erzeugte Erschütterungen, welche zu einem verfälschten Signal führen können. Die Folge der möglichen zu großen Abweichung von dem Referenzradius wäre, dass das drehantreibbare Werkzeug ausgetauscht oder angehalten werden würde, was wiederum zu einem Stillstand der Werkzeugmaschine führt. Die Folgen des Stillstands der Werkzeugmaschine sind eine geringere Produktionseffizienz.

### Stand der Technik

In "Vermessung rotierender Werkzeuge in HSC-Fräsmaschinen" von K. Rall et al. in ZWF 93, Jahr 1998, Heft 4, Seiten 127 bis 130 ist ein Verfahren zum Ermitteln der Wirkkontur eines Werkzeugs mit einer Laserlichtschranke beschrieben. Dabei wird das Werkzeug gedreht und quer zu dem Messstrahl der Laserlichtschranke verfahren. Es werden Messpositionen ermittelt, die den Eintritt des Werkzeugs in den und dessen Austritt aus dem Messstrahl angeben. Aus der Differenz dieser Messpositionen wird der Wirkdurchmesser des Werkzeugs bestimmt. Dieser Vorgang wird, jeweils nach axialem Verschieben des Werkzeugs, sooft wiederholt, bis die gesamte interessierende Wirkkontur bekannt ist.

Die DE 42 38 504 A1 zeigt ein Verfahren zum Vermessen eines Werkzeuges in einer Spindel einer Werkzeugmaschine, bei der das Werkzeug durch relatives Verfahren zwischen einem die Spindel aufnehmenden Spindelstock und einem Werkstücktisch zugestellt wird. Die relative Lage des Spindelstockes zu einem Referenzpunkt wird mittels eines Wegmesssystems bestimmt, wobei das Werkzeug in Richtung einer seiner Koordinaten einer im Wesentlichen quer zu der Koordinate verlaufenden optischen Messebene mit zugeordnetem optischem Messsystem zugestellt wird. Das Messsystem gibt dabei ein Messsignal aus, anhand dessen bestimmt wird, ob das Werkzeug in die Messebene eintaucht. Bei Eintauchen des Werkzeuges in die Messebene wird die relative Lage des Spindelstockes als Lagemesswert gemessen und aus dem Lagemesswert sowie aus der relativen Lage der Messebene die Abmessungen des Werkzeuges berechnet.

Aus der DE 10 2013 011 307 A1 (Blum-Novotest GmbH) ist ein Verfahren zum Vermessen eines in einer Werkstückbearbeitungmaschine aufgenommenen Werkzeugs mit wenigstens einer Schneide oder Kante bekannt. Eine Messvorrichtung, aufweisend einen Laserstrahler und einen Laserstrahlempfänger dient zur berührungslosen Abtastung eines Werkzeugs mittels eines von dem Laserstrahler zu dem Laserstrahlempfänger gesandten Messstrahls. Aus dem Laserstrahlempfänger wird für ein Maß einer Abschattung des Messstrahls bei der Abtastung des Werkzeugs mittels des Messstrahls wenigstens ein analoges oder digitales Signal ausgegeben, das einen durchgehenden Wertebereich mit einer oberen Grenze und einer unteren Grenze haben kann. Eine Auswerteeinrichtung dient zum Empfangen und Verarbeiten des wenigstens einen Signals, um dieses zu verarbeiten und ein Ausgangssignal auszugeben; das Ausgangssignal gibt an, dass bei dem Laserstrahlempfänger eine Lichtmenge aus dem Messstrahl ankommt, die einen vorbestimmten Schwellenwert über- oder unterschreitet. Das Werkzeug wird in den Messstrahl so eingeführt, dass eine zu messende wenigstens eine Schneide oder Kante des Werkzeugs, während dieses rotiert, in den Messstrahl eintaucht und wieder verlässt. Die dabei bei dem Laserstrahlempfänger ankommende Lichtmenge aus dem Messstrahl wird so durch die Schneide(n) / Kante(n) des Werkzeugs moduliert. Das Ausgangsignal, das ein Ergebnis eines Vergleichens des wenigstens einen Signals mit dem Schwellenwert repräsentiert, wird ausgegeben. Das Maß einer Stellgröße in der Auswerteeinrichtung und/oder der Messvorrichtung wird verändert, um das Signal oder den Schwellenwert umzuformen.

Diese bekannte Vorgehensweise verkürzt die Messzeit früherer Verfahren, bei dem in der Regel das Werkzeug relativ zum Messstrahl verfahren wird. Bei dieser bekannten Vorgehensweise werden die mechanischen Achsbewegungen der Werkstückbearbeitungsmaschine durch "elektronische Bewegungen" ersetzt, wird die Belastung insbesondere bei Werkstückbearbeitungsmaschinen mit großen bewegten Massen deutlich reduziert. Unter "elektronische Bewegungen" ist hier verstanden, dass eine andere Größe als die mechanische Position der Spindel der Werkstückbearbeitungsmaschine mit dem Werkzeug gezielt verändert wird, um die Messungen zu variieren.

Bei diesen bekannten Vorrichtungen / Verfahren wird ein in der Werkzeugspindel der Werkzeugmaschine eingespanntes, drehendes oder stehendes Werkzeug in Längs- oder Querrichtung in einen Laserstrahl hinein oder aus dem Laserstrahl herausgeführt.

Dabei werden das Werkzeug und der Laserstrahl relativ zueinander bewegt. Die vom Werkzeug verursachte Strahlabschattung wird gemessen und bei einer definierten Abschattung ein Schaltsignal ausgegeben. Zum Zeitpunkt dieses Schaltsignals wird die Position der jeweiligen Maschinenachse erfasst. Der erfasste Wert entspricht z.B. dem maximalen Werkzeugradius oder der maximalen Werkzeuglänge. Da bei dieser Art der Messung bei drehendem Werkzeug das Verhältnis zwischen Vorschub und Drehzahl die erreichbare Genauigkeit vorgibt, muss zur präzisen Messung das Werkzeug mit sehr kleinem Vorschub relativ zum Laserstrahl bewegt werden. Nach dem ersten Erfassen zum Beispiel des Schaltsignals, das den Werkzeugradius anzeigt, wird die Messung zur Signalbestätigung oder zur Mittelwertbildung in der Regel ein- oder mehrmals wiederholt. Daher benötigt der gesamte Messvorgang für ein Werkzeug relativ viel Zeit.

### Aufgabe

Ausgehend von den zuvor beschriebenen Ansätzen besteht das Problem darin, eine Vorrichtung zum Messen und Kontrollieren eines drehantreibbaren Werkzeugs bereitzustellen, die zwischen einem dem drehantreibbaren Werkzeug entsprechenden Schaltsignal und einem durch Verunreinigung oder Störung verursachten Schaltsignal unterscheidet.

Ein weiteres Problem besteht darin, die Prozesssicherheit beim Messen und Kontrollieren eines drehantreibbaren Werkzeugs bei gleichzeitiger Reduzierung der für den Messvorgang erforderlichen Messzeit zu erhöhen.

### Vorgeschlagene Lösung

Diese Aufgabe wird durch eine Vorrichtung nach dem Anspruch 1 und durch ein Verfahren nach dem Anspruch 23 gelöst. Weiterbildungen der Vorrichtung nach dem Anspruch 1 sowie des Verfahrens nach dem Anspruch 23 werden durch die abhängigen Ansprüche definiert.

Eine Vorrichtung zur Lösung der Aufgabe, umfasst eine Verarbeitungseinheit zum Messen und Kontrollieren eines drehantreibbaren Werkzeugs, und eine mit der Verarbeitungseinheit verbundene Lichtschrankenanordnung, die eine Lichtsende-Einheit und eine Lichtempfangs-Einheit umfasst, wobei die Verarbeitungseinheit dazu eingerichtet ist, von der Lichtempfangs-Einheit zu einer durch das drehantreibbare Werkzeug und/oder wenigstens einer Schneide des drehantreibbaren Werkzeugs erzeugten Abschattung zumindest annähernd proportionale Signale an einer ersten Messposition zu empfangen.

Die Verarbeitungseinheit ist zum Auswerten der empfangenen Signale und zum Senden von Steuersignalen an die Lichtschrankenanordnung eingerichtet, wobei die Verarbeitungseinheit für das Auswerten der empfangenen Signale zur Durchführung der folgenden Schritte eingerichtet ist:
- wiederholtes Bestimmen eines Nutzsignalanteils des empfangenen Signals;
- Überlagern der wiederholt bestimmten Nutzsignalanteile;
- Anwenden eines Blockfilters auf die überlagerten Nutzsignalanteile und Bestimmen eines repräsentativen Werts für die Nutzsignalanteile basierend auf den überlagerten Nutzsignalanteilen;
- Bereitstellen einer Information über den zuvor bestimmten repräsentativen Wert für Nutzsignalanteile an eine numerische Steuerung einer Werkzeugmaschine;
- Bestimmen einer Form und/oder einer Länge und/oder einer Schneidenzahl des drehantreibbaren Werkzeugs basierend auf dem repräsentativen Wert für die Nutzsignalanteile und/oder Bestimmen einer Form und/oder einer Länge der wenigstens einen Schneide basierend auf dem repräsentativen Wert für die Nutzsignalanteile;
- Bereitstellen einer Information über die zuvor bestimmte die Form und/oder Länge und/oder die Schneidenzahl des drehantreibbaren Werkzeugs an die numerische Steuerung der Werkzeugmaschine und/oder Bereitstellen einer Information über die zuvor bestimmte Form und/oder Länge der wenigstens einen Schneide an die numerische Steuerung der Werkzeugmaschine.

Eine Frequenz und/oder Amplitude des Signals können vordefiniert sein, wobei die Verarbeitungseinheit dazu eingerichtet sein kann, basierend auf der vordefinierten Frequenz und Amplitude den Störsignalanteil und/oder den Nutzsignalanteil zu bestimmen.

Die Verarbeitungseinheit kann dazu eingerichtet sein, einen Nutzsignalanteil, einen Störsignalanteil und/oder das empfangene Signal wiederholt zu bestimmen.

Die Verarbeitungseinheit kann dazu eingerichtet sein, die wiederholt bestimmten Nutzsignalanteile über einen längeren Zeitraum aufzuzeichnen und zu speichern und basierend auf der höheren Datenmenge eine Mittelung der Nutzsignalanteile durchzuführen, um die Genauigkeit und Prozesssicherheit der wiederholt bestimmten Nutzsignalanteile zu erhöhen.

Die Verarbeitungseinheit kann dazu eingerichtet sein, die wiederholt bestimmten Nutzsignalanteile miteinander zu vergleichen und basierend auf dem Vergleich einen Messpositionsfehler zu bestimmen. Weiter kann die Verarbeitungseinheit dazu eingerichtet sein, basierend auf dem Messpositionsfehler eine zweite Messposition zu bestimmen, wobei die Lichtempfangs-Einheit ein zu dem durch das drehanbtreibbare Werkzeug und/oder die wenigstens eine Schneide des drehantreibbaren Werkzeugs erzeugten Abschattung zumindest annähernd proportionale Signale an der zweiten Messposition erzeugt.

Alternativ kann die Verarbeitungseinheit dazu eingerichtet sein, die wiederholten Nutzsignalanteile, Störsignalanteile und/oder empfangenen Signale zu überlagern, auf die überlagerten Nutzsignalanteile, Störsignalanteile und/oder empfangenen Signale einen aufgabenspezifischen Blockfilter anzuwenden, einen repräsentativen Wert der Nutzsignalanteile, der Störsignalanteile und/oder der empfangenen Signale basierend auf den überlagerten Nutzsignalanteilen, den Störsignalanteilen und/oder empfangenen Signalen zu bestimmen und eine Information über den repräsentativen Wert der Nutzsignalanteile, der Störsignalanteile und/oder der empfangenen Signale zur Weiterleitung an die numerische Steuerung der Werkzeugmaschine bereitzustellen. Der aufgabenspezifische Blockfilter kann als ein Medianwertfilter, ein Minimumwertfilter, ein Maximumwertfilter oder ein Mittelwertfilter oder eine Kombination aus diesen Filterarten ausgeführt sein.

Die Verarbeitungseinheit kann dazu eingerichtet sein, basierend auf dem Nutzsignalanteil, oder dem empfangenen Signal eine Form und/oder eine Länge des drehantreibbaren Werkzeugs und/oder der wenigstens einen Schneide zu bestimmen und eine Information über die Form und/oder Länge des drehantreibbaren Werkzeugs und/oder der wenigstens einen Schneide an die numerische Steuerung der Werkzeugmaschine bereitzustellen. Unter der Länge des drehantreibbaren Werkzeugs ist eine geometrische Abmessung des drehantreibbaren Werkzeugs zu verstehen. Bei Schneidwerkzeugen ist die geometrische Abmessung der wirksame Schneidendurchmesser und/oder die wirksame Schneidenlänge, bei Schleifwerkzeugen der wirksame Schleifdurchmesser und/oder die wirksame Schleiflänge, bei Gewindeformern der wirksame Gewindedurchmesser und/oder die wirksame Gewindeeinsatzlänge, bei zylindrischen Referenzwerkzeugen der wirksame Referenzdurchmesser und/oder die wirksame Referenzlänge des drehantreibbaren Werkzeugs.

Zum Bestimmen der Form und/oder der Länge kann die Verarbeitungseinheit dabei auf eine vordefinierte Kalibrierfunktion zugreifen, die einen Zusammenhang zwischen einer durch das drehantreibbare Werkzeug und/oder die wenigstens eine Schneide erzeugten Abschattung und einem zugehörigen zumindest annähernd proportionalen Signal angibt.

Die Kalibrierfunktion beschreibt den direkten Zusammenhang zwischen der erzeugten Abschattung eines in den Messstrahl eintauchenden Objekts und einem zugehörigen, an der Lichtempfangs-Einheit empfangenen, zumindest annähernd proportionalen Signal. Der Zusammenhang wird durch einen als Linearisierung des Messstrahls bezeichneten Kalibriervorgang bestimmt und durch eine Linearisierungskennlinie beschrieben. Der Kalibriervorgang kann entweder durch ein schrittweises Eintauchen eines Referenzobjekts in den Messstrahl erfolgen oder durch ein kontinuierliches langsames Eintauchen eines Referenzobjekts in den Messstrahl mit konstanter Geschwindigkeit, wobei der Zusammenhang zwischen der erzeugten Abschattung und einem zugehörigen, zumindest annähernd proportionalen Signal zwischen einer minimalen Abschattung und einer maximalen Abschattung hergestellt wird. In beiden Fällen wird der Bezugspunkt (Nullwert) der Linearisierungskennlinie idealerweise auf die mittlere Abschattung zwischen der minimalen Abschattung und der maximalen Abschattung festgelegt. Dieser Bezugspunkt ist identisch mit der Position der jeweiligen Maschinenachse zum Zeitpunkt des Schaltsignals, das bei einer definierten Abschattung durch die vom Werkzeug verursachte Strahlabschattung ausgegeben wird.

Da der Zusammenhang zwischen der Abschattung des in den Messstrahl eintauchenden Objektes und dem zumindest annähernd proportionalen Signal aufgrund nicht idealer Eigenschaften des Messstrahls von der Richtung des in den Messstrahl eintauchenden Objektes abhängig ist, ist es empfehlenswert, einen Kalibriervorgang für jede Richtung der in den Messstrahl eintauchenden Objekte durchzuführen. Die durch den Kalibriervorgang ermittelten Linearisierungskennlinien werden in der Verarbeitungseinheit in Form einer Tabelle und/oder in Form einer Polynomfunktion zu jeder Kalibrierrichtung getrennt gespeichert.

Ferner kann die Verarbeitungseinheit basierend auf der bestimmten Form und/oder Länge des drehantreibbaren Werkzeugs eine Werkzeugidentifikation durch Abgleichen der bestimmten Form und/oder Länge mit einer vordefinierten Form und/oder Länge bekannter Werkzeuge ausführen.

Alternativ kann die Verarbeitungseinheit dazu eingerichtet sein, ein lokales Maximum der Abschattung des drehantreibbaren Werkzeugs und/oder der wenigstens einen Schneide zu bestimmen, um eine Länge des drehantreibbaren Werkzeugs und/oder der wenigstens einen Schneide durch Verwenden der vordefinierten Kalibrierfunktion zu bestimmen und eine Information über die Länge des drehantreibbaren Werkzeugs und/oder der wenigstens einen Schneide zur Weiterleitung an die numerische Steuerung der Werkzeugmaschine bereitzustellen.

Um einen symmetrischen oder annähernd symmetrischen Signalbereich des Signals zu bestimmen, kann die Verarbeitungseinheit dazu eingerichtet sein, den symmetrischen oder annähernd symmetrischen Signalbereich mit einer Sinusregression, einer Polynomregression, einer Gauß-Regression und/oder einer exponentiellen Glättung zu fitten und das lokale Maximum in dem symmetrisch oder annähernd symmetrisch gefitteten Signalbereich zu bestimmen.

Die Verarbeitungseinheit kann dazu eingerichtet sein, das lokale Maximum mittels Spitzenwert-Detektion zu bestimmen.

Die Verarbeitungseinheit kann basierend auf dem Nutzsignalanteil eine Verunreinigung und/oder eine Störstelle des drehantreibbaren Werkzeugs oder der wenigstens einen Schneide bestimmen. Falls die Verarbeitungseinheit eine Verunreinigung bestimmt, ist die Verarbeitungseinheit dazu eingerichtet, eine Information über ein Reinigungssignal zur Reinigung des verunreinigten drehantreibbaren Werkzeugs und/oder der wenigstens einen Schneide zur Weiterleitung an die numerische Steuerung der Werkzeugmaschine bereitzustellen und, falls die Verarbeitungseinheit eine Störstelle bestimmt, eine Information über ein Warnsignal zur Weiterleitung an die numerische Steuerung der Werkzeugmaschine bereitzustellen.

Das drehantreibbare Werkzeug kann eine Vielzahl von Schneiden aufweisen, die Abschattungen des Lichtstrahls erzeugen, wobei die Lichtempfangs-Einheit zu den Abschattungen diese wiedergebende wenigstens annähernd proportionale Signale erzeugt.

Die Verarbeitungseinheit kann dazu eingerichtet sein, basierend auf Nutzsignalanteilen der empfangenen Signale eine kürzeste und eine längste Schneide zu identifizieren und eine Information über die identifizierte kürzeste und längste Schneide zur Weiterleitung an die numerische Steuerung der Werkzeugmaschine bereitzustellen.

Weiter kann die Verarbeitungseinheit dazu eingerichtet sein, basierend auf der identifizierten kürzesten und längsten Schneide einen Rundlauffehler des drehantreibbaren Werkzeugs zu ermitteln, wenn Nutzsignalanteile und/oder Störsignalanteile von wiederholt empfangenen Signalen um einen vorbestimmten Wert voneinander abweichen.

Das drehantreibbare Werkzeug kann ebenso eine annähernd zylindrische Oberfläche und/oder eine annähernd ebene Stirnfläche aufweisen, die Abschattungen des Lichtstrahls erzeugen, wobei die Lichtempfangs-Einheit zu den Abschattungen diese wiedergebende wenigstens annähernd proportionale Signale erzeugt.

Die Verarbeitungseinheit kann dazu eingerichtet sein, basierend auf Nutzsignalanteilen der empfangenen Signale eine kleinste und eine größte geometrische Abmessung der annähernd zylindrischen Oberfläche und/oder der annähernd ebenen Stirnfläche zu identifizieren und eine Information über die identifizierte kleinste und größte geometrische Abmessung zur Weiterleitung an die numerische Steuerung der Werkzeugmaschine bereitzustellen.

Weiter kann die Verarbeitungseinheit dazu eingerichtet sein, basierend auf der identifizierten kleinsten und größten geometrischen Abmessung einen Rundlauffehler und/oder einen Planlauffehler des drehantreibbaren Werkzeugs zu ermitteln, wenn Nutzsignalanteile von wiederholt empfangenen Signalen um einen vorbestimmten Wert voneinander abweichen.

Die Verarbeitungseinheit kann dazu eingerichtet sein, basierend auf dem identifizierten Rundlauffehler und/oder Planlauffehler des drehantreibbaren Werkzeugs eine Information über die Rundlaufeigenschaften einer Dreheinrichtung (Spindel) der Werkzeugmaschine zu bestimmen und diese Information zur Weiterleitung an die numerische Steuerung der Werkzeugmaschine bereitzustellen.

Die Verarbeitungseinheit kann dazu eingerichtet sein, einen Spindelzustand der Werkzeugmaschine zu analysieren. Für diese Spindelzustandsanalyse wird der Abschattungsverlauf unter Verwendung eines (hochpräzisen konzentrisch geschliffenen) Referenzwerkzeugs bei zuvor definierten Drehzahlen erfasst. Die Signalverarbeitung unterscheidet sich dabei grundlegend von der der Werkzeugmessung. Auch höherfrequente Anteile werden in die Analyse miteinbezogen. Einzelereignisse, verursacht bspw. durch einen Kühlmitteltropfen, werden durch die beschriebenen Filter eliminiert. Die Aufarbeitung des ermittelten Signalverlaufes umfasst die Ermittlung des Rundlauffehlers, die Zerlegung in mehrere Frequenzbänder, Analyse von Crestfaktoren (Scheitelfaktor), Einzelimpulsen und/oder quadratischen Mittel-, RMS-, Leistungswerten. Die vom Auswertealgorithmus gelieferten Kennzahlen werden unter Einbeziehung von Erfahrungswerten mit den Daten des Anfangszustands der Werkzeugmaschine, insbesondere der Spindel, verglichen. Wird ein vorbestimmter Schwellenwert überschritten, erfolgt eine Warnmeldung auf der Maschinensteuerung. Ziel ist es einen Lagerverschleiß und/oder eine Schädigung der Spindel der Werkzeugmaschine vorausschauend zu erkennen, um eine optimale Instandhaltung auf objektiven Aussagen planen zu können. Somit wird die Maschinenverfügbarkeit verbessert und nachhaltige Qualität sichergestellt. Ein Maschinenausfall und die damit verbundenen Risiken werden vermieden.

Die Verarbeitungseinheit kann dazu eingerichtet sein, zum Bestimmen der Nutzsignalanteile und/oder Störsignalanteile eine Autokorrelationsfunktion auf die empfangenen Signale anzuwenden.

Ferner kann die Verarbeitungseinheit dazu eingerichtet sein, basierend auf einer Eintauchgeschwindigkeit, einer Eintauchtiefe, einer Drehzahl, einer Schneidenanzahl, einer Raumfeuchtigkeit, einer Periodendauer einer Umdrehung, einer Periodizität des empfangenen Signals, einer Position und/oder eines Werkzeugtyps des drehantreibbaren Werkzeugs und/oder der wenigstens einen Schneide den Nutzsignalanteil zu bestimmen und eine Information über den Nutzsignalanteil zur Weiterleitung an die numerische Steuerung der Werkzeugmaschine bereitzustellen.

Weiter wird eine Werkzeugmaschine vorgeschlagen, umfassend eine Verarbeitungseinheit zum Messen und Kontrollieren eines drehantreibbaren Werkzeugs nach einem der vorangegangenen Ausführungsbeispiele.

Ein Verfahren zum Messen und Kontrollieren eines drehantreibbaren Werkzeugs mittels einer Vorrichtung, umfassend eine Verarbeitungseinheit zum Messen und Kontrollieren des drehantreibbaren Werkzeugs, und eine mit der Verarbeitungseinheit verbundene Lichtschrankenanordnung, die eine Lichtsende-Einheit und eine Lichtempfangs-Einheit umfasst, umfasst die folgenden Schritte:
- Erfassen einer durch das drehantreibbare Werkzeug und/oder wenigstens eine Schneide des drehantreibbaren Werkzeugs erzeugten Abschattung an einer ersten Messposition mittels der Lichtschrankenanordnung;
- Erzeugen zu der erzeugten Abschattung wenigstens annähernd propor-tionaler Signale mittels der Lichtempfangs-Einheit;
- wiederholtes Bestimmen eines Nutzsignalanteils aus dem empfangenen Signal mittels der Verarbeitungseinheit;
- Überlagern der wiederholt bestimmten Nutzsignalanteile;
- Anwenden eines Blockfilters auf die überlagerten Nutzsignalanteile und Bestimmen eines repräsentativen Werts für die Nutzsignalanteile basierend auf den überlagerten Nutzsignalanteilen;
- Bereitstellen einer Information über den zuvor bestimmten repräsentativen Wert für Nutzsignalanteile an eine numerische Steuerung einer Werkzeugmaschine;
- Bestimmen einer Form und/oder einer Länge und/oder der Schneidenzahl des drehantreibbaren Werkzeugs basierend auf dem repräsentativen Wert für die Nutzsignalanteile und/oder Bestimmen einer Form und/oder einer Länge der wenigstens einen Schneide basierend auf dem repräsentativen Wert für die Nutzsignalanteile;
- Bereitstellen einer Information über die zuvor bestimmte Form und/oder Länge und/oder der Schneidenzahl des drehantreibbaren Werkzeugs an die numerische Steuerung der Werkzeugmaschine und/oder Bereitstellen einer Information über die zuvor bestimmte Form und/oder Länge der wenigstens einen Schneide an die numerische Steuerung der Werkzeugmaschine.

Das Verfahren kann weiter folgende Schritte umfassen: wiederholtes Bestimmen des Nutzsignalanteils, des Störsignalanteils und/oder des Signals.

Das Verfahren kann die folgenden Schritte umfassen: Vergleichen der wiederholt bestimmten Nutzsignalanteile, des Störsignalanteile und/oder der Signale; Bestimmen eines Messpositionsfehlers basierend auf dem Vergleich der wiederholt bestimmten Nutzsignalanteile, des Störsignalanteile und/oder der Signale; Bestimmen einer zweiten Messposition basierend auf dem Messpositionsfehler; und Erzeugen eines zu der durch das drehantreibbare Werkzeug und/oder die wenigstens eine Schneide des drehantreibbaren Werkzeugs erzeugten Abschattung zumindest annähernd proportionalen Signals an der zweiten Messposition.

Alternativ kann das Verfahren die folgenden Schritte umfassen: Überlagern der wiederholt bestimmten Nutzsignalanteile, der Störsignalanteile und/oder der Signale; Anwenden eines aufgabenspezifischen Blockfilters auf die überlagerten Nutzsignalanteile, die Störsignalanteile und/oder die Signale; Bestimmen eines repräsentativen Werts der überlagerten Nutzsignalanteile, der Störsignalanteile und/oder der Signale, auf die der aufgabenspezifische Blockfilter angewendet wurde; und Bereitstellen einer Information über den repräsentativen Wert der überlagerten Nutzsignalanteile, der Störsignalanteile und/oder der Signale an die numerische Steuerung der Werkzeugmaschine.

Das Verfahren kann weiter die folgendende Schritte umfassen: Bestimmen einer Form und/oder Länge und/oder Schneidenanzahl des drehantreibbaren Werkzeugs und/oder der wenigstens einen Schneide basierend auf dem Nutzsignalanteilund/oder dem Signal; und Bereitstellen einer Information über die Form und/oder die Länge und/oder Schneidenanzahl des drehantreibbaren Werkzeugs und/oder der wenigstens einen Schneide an die numerische Steuerung der Werkzeugmaschine. Dabei kann der Schritt des Bestimmens der Form und/oder Länge und/oder Schneidenanzahl des drehantreibbaren Werkzeugs und/oder der wenigstens einen Schneide weiter umfassen: Verwenden einer vordefinierten Kalibrierfunktion, die einen Zusammenhang zwischen einer durch das drehantreibbare Werkzeug und/oder die wenigstens eine Schneide erzeugten Abschattung und einem zugehörigen zumindest annähernd proportionalen Signal angibt.

Das Verfahren kann weiter den Schritt umfassen: Identifizieren des drehantreibbaren Werkzeugs durch Abgleichen der bestimmten Form und/oder Länge und/oder Schneidenanzahl des drehantreibbaren Werkzeugs mit einer vordefinierten Form und/oder Länge und/oder Schneidenanzahl bekannter Werkzeuge.

Weiter kann das Verfahren die folgenden Schritte umfassen: Bestimmen eines lokalen Maximums der Abschattung, um eine Länge des drehantreibbaren Werkzeugs und/oder der wenigstens einen Schneide zu bestimmen; und Bereitstellen einer Information über das Maximum der Abschattung an die numerische Steuerung der Werkzeugmaschine.

Der Schritt des Bestimmens des lokalen Maximums der Abschattung kann weiter die folgenden Schritte umfassen: Bestimmen eines symmetrischen oder annährend symmetrischen Signalbereichs des Signals; Fitten mit einer Sinusregression, einer Polynomregression, einer Gauß-Regression und/oder einer exponentiellen Glättung des symmetrischen oder annährend symmetrischen Signalbereichs; und Bestimmen des lokalen Maximums in dem symmetrisch oder annährend symmetrisch gefitteten Signalbereich.

Alternativ kann das lokale Maximum mittels Spitzenwert-Detektion bestimmt werden.

Das Verfahren kann weiter die folgenden Schritte umfassen: Bestimmen einer Verunreinigung und/oder Störstelle des drehantreibbaren Werkzeugs und/oder der wenigstens einen Schneide basierend auf dem Nutzsignalanteil; mit den folgenden Schritten, falls eine Verunreinigung bestimmt wird: Bereitstellen einer Information über ein Reinigungssignal des drehantreibbaren Werkzeugs und/oder der wenigstens einen Schneide; und mit folgendem Schritt, falls eine Störstelle bestimmt wird: Bereitstellen einer Information über ein Warnsignal.

Das Verfahren kann, wenn das drehantreibbare Werkzeug eine Vielzahl an Schneiden aufweist, weiter die folgenden Schritte umfassen: Erfassen von durch die Vielzahl an Schneiden des drehantreibbaren Werkzeugs erzeugten Abschattungen in dem Lichtstrahl; Erzeugen von zu den erzeugten Abschattungen proportionalen Signalen; und Bestimmen von Störsignalanteilen und/oder Nutzsignalanteilen der proportionalen Signale.

Weist das drehantreibbare Werkzeug die Vielzahl an Schneiden auf, kann das Verfahren die folgenden Schritte umfassen: Bestimmen einer kürzesten und einer längsten Schneide des drehantreibbaren Werkzeugs basierend auf den Nutzsignalanteilen der proportionalen Signale; und Bestimmen eines Rundlauffehlers basierend auf den bestimmten kürzesten und längsten Schneiden des drehantreibbaren Werkzeugs, wenn Nutzsignalanteile und/oder Störsignalanteile von wiederholt empfangenen Signalen um einen vorbestimmten Wert voneinander abweichen

Bei dem Verfahren können der Nutzsignalanteil, der Störsignalanteil und/oder das Signal durch Anwenden einer Autokorrelation bestimmt werden.

Weiter können bei dem Verfahren der Nutzsignalanteil und/oder der Störsignalanteil basierend auf einer Eintauchgeschwindigkeit, einer Eintauchrichtung, einer Eintauchtiefe, einer Abschattungsschwelle, einer Abschattungszeit pro Schneide, einer Drehzahl, einer Schneidenanzahl, einer Raumfeuchtigkeit, einer Periodendauer einer Umdrehung, einer Periodizität des empfangenen Signals, einer Position und/oder eines Werkzeugtyps des drehantreibbaren Werkzeugs und/oder der wenigstens einen Schneide bestimmt und die Information über den Nutzsignalanteil und/oder den Störsignalanteil als eine Information an die numerische Steuerung der Werkzeugmaschine bereitgestellt werden.

### Kurze Beschreibung der Zeichnung

Weitere Einzelheiten, Merkmale, Vorteile und Wirkungen der vorliegend beschriebenen Verfahren und Vorrichtungen ergeben sich aus der nachfolgenden Beschreibung derzeit bevorzugter Varianten sowie aus den Zeichnungen. Dabei zeigen:
Fig. 1 eine schematische Darstellung einer Verarbeitungseinheit zum Messen und Kontrollieren eines drehantreibbaren Werkzeugs gemäß einer ersten Ausführung;
Fig. 2 bis 4 eine schematische Darstellung von Signalverlaufsdiagrammen im Betrieb einer Variante der ersten Verarbeitungseinheit;
Fig. 5 ein Block-Diagramm eines Verfahrens zum Messen und Kontrollieren eines drehantreibbaren Werkzeugs;
Fig. 6 eine Schematische Darstellung eines Signalverlaufsdiagramms und einer Überlagerung der Signale im Betrieb einer Variante der ersten Verarbeitungseinheit;
Fig. 7 eine Schematische Darstellung einer Kalibrierfunktion eines Lichtstrahls;
Fig. 8 eine schematische Darstellung eines Signalverlaufsdiagramms und eines Fits des Signalverlaufsdiagramms im Betrieb einer Variante der ersten Verarbeitungseinheit;
Fig. 9 eine schematische Darstellung einer Verarbeitungseinheit zum Messen und Kontrollieren eines drehantreibbaren Werkzeugs gemäß einer zweiten Ausführung;
Fig. 10 eine schematische Darstellung einer Verarbeitungseinheit zum Messen und Kontrollieren eines drehantreibbaren Werkzeugs gemäß einer dritten Ausführung.
Fig. 11 eine schematische Darstellung einer Verarbeitungseinheit zum Messen und Kontrollieren eines drehantreibbaren Werkzeugs gemäß einer vierten Ausführung.

### Detaillierte Beschreibung der Zeichnungen

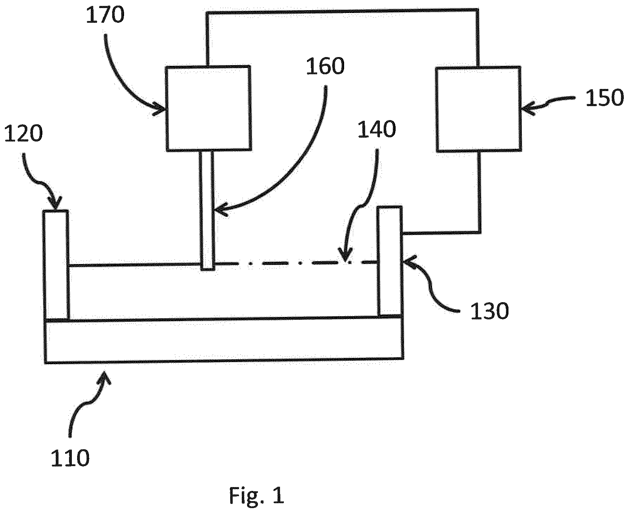

In Fig. 1 ist schematisch eine Verarbeitungseinheit 150 zum Messen und Kontrollieren eines drehantreibbaren Werkzeugs 160 gemäß einer ersten Ausführung veranschaulicht. Das drehantreibbare Werkzeug 160 ist in eine Werkzeugmaschine 170 eingespannt und kann von dieser an eine erste Messposition gefahren werden. Vorzugsweise wird das drehantreibbare Werkzeug 160 dabei derart positioniert, dass wenigstens ein Teil des Werkzeugs 160 oder wenigstens eine Schneide 180 des Werkzeugs wenigstens teilweise in einen Lichtstrahl 140 einer Lichtschrankenanordnung 110 hineinragt. Da das Werkzeug 160 und/oder die wenigstens eine Schneide 180 wenigstens teilweise in den Lichtstrahl 140 hineinragt, schattet das Werkzeug 160 und/oder die wenigstens eine Schneide 180 einen Teil des Lichtstrahls 140 ab, was durch eine Punkt-Strich-Linie entsprechend gekennzeichnet ist.

Die Lichtschrankenanordnung 110 umfasst eine Lichtsende-Einheit 120 und eine Lichtempfangs-Einheit 130. Die Lichtsende-Einheit 120 ist zum Senden des Lichtstrahls 140 eingerichtet und die Lichtempfangs-Einheit 130 ist zum Empfangen des Lichtstrahls 140 eingerichtet. Bei dem von der Lichtsende-Einheit 120 gesendeten Licht handelt es sich hier um Laserlicht. Weiter ist die Lichtempfangs-Einheit 130 mit der Verarbeitungseinheit 150 verbunden, sodass die Verarbeitungseinheit 150 von der Lichtempfangs-Einheit 130 zu einer durch das drehantreibbare Werkzeug 160 und/oder einer Schneide 180 des drehantreibbaren Werkzeugs 160 erzeugten Abschattung zumindest annähernd proportionale Signale an der ersten Messposition empfängt.

Die Verarbeitungseinheit 150 wertet die empfangenen Signale aus, indem die Verarbeitungseinheit 150 einen Störsignalanteil und/oder einen Nutzsignalanteil der empfangenen Signale bestimmt. Ferner kann die Verarbeitungseinheit 150 mit einer hier nicht weiter veranschaulichten numerischen Steuerung der Werkzeugmaschine 170 verbunden sein, und eine Information über den Störsignalanteil, den Nutzsignalanteil und/oder die empfangenen Signale bereitstellen.

Eine Kommunikation zwischen der Lichtempfangseinheit 130 und der Verarbeitungseinheit 150, sowie eine Kommunikation zwischen der Verarbeitungseinheit und der numerischen Steuerung der Werkzeugmaschine 170 erfolgt hier kabelgebunden, kann aber auch drahtlos erfolgen. Weiter kann die Verarbeitungseinheit von der numerischen Steuerung der Werkzeugmaschine 170 Signale empfangen und diese verarbeiten. Die Verarbeitungseinheit 150 ist hier ferner dazu eingerichtet, Steuersignale an die Lichtempfangs-Einheit 130 und/oder die Lichtsende-Einheit 120 zu senden, um diese zu steuern. Alternativ oder zusätzlich können die Lichtempfangs-Einheit 130 und/oder die Lichtsende-Einheit 120 mit der numerischen Steuerung der Werkzeugmaschine verbunden sein und von dieser gesteuert werden.

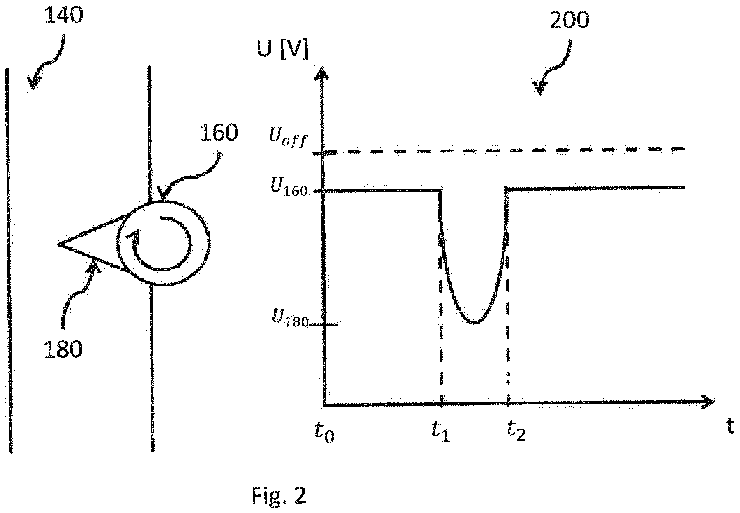

Zur besseren Veranschaulichung des Bestimmens des Störsignalanteils und/oder Nutzsignalanteils der empfangenen Signale, werden in den Fig. 2 bis 4, 6 und 7 schematische Signalverlaufsdiagramme veranschaulicht.

In Fig. 2 ist ein vergrößerter Lichtstrahl 140 zur besseren Veranschaulichung gezeigt. Das drehantreibbare Werkzeug 160 mit der wenigstens einen Schneide 180 ist teilweise in dem Lichtstrahl 140 angeordnet und wird um eine senkrecht zu dem Lichtstrahl 140 verlaufende Drehachse durch die Werkzeugmaschine 170 gedreht. Der innerhalb des Werkzeugs 160 dargestellte Pfeil soll dabei die Rotationsrichtung angeben, welche in dem vorliegenden Fall im Uhrzeigersinn verläuft.

Weiter ist in der Fig. 2 ein Signalverlaufsdiagramm 200 dargestellt, bei dem die x-Achse eine Zeit und die y-Achse eine Spannung wiedergibt. Das Spannungssignal wird dabei von der Lichtempfangs-Einheit 130 erzeugt und ist das zu der Abschattung proportionale Signal. Befinden sich in dem Lichtstrahl 140 keine lichtabsorbierenden oder lichtstreuenden Partikel (beispielsweise Kühlmitteltröpfchen, Späne oder Spänereste), das drehantreibbare Werkzeug 160 oder die wenigstens eine Schneide 180, erzeugt die Lichtempfangseinheit 130 ein zu dem Lichtstrahl 140 proportionales Spannungssignal U_{off}, dass in dem vorliegenden Fall eine 0% Abschattung wiedergibt.

Befindet sich das Werkzeug 160 an der in Fig. 2 gezeigten Position, so dass dieses wenigstens teilweise in den Lichtstrahl 140 hineinragt, ohne dass die wenigstens eine Schneide 180 in den Lichtstrahl 140 hineinragt, erzeugt die Lichtempfangs-Einheit 130 ein Spannungssignal U₁₆₀ (t₀). Entsprechend der von dem Werkzeug 160 erzeugten Abschattung, ist das Spannungssignal U₁₆₀ niedriger als das Spannungssignal U_{off}. Ein Verhältnis der durch das Werkzeug 160 erzeugten Abschattung zu dem Querschnitt des Lichtstrahls 160 entspricht wenigstens annähernd einem Verhältnis des Spannungssignals U_{off} zu dem Spannungssignal U₁₆₀. Die in Fig. 2 und den nachfolgenden Figuren gezeigten Signalverlaufsdiagramme dienen Erklärungszwecken und können deshalb von echten aufgenommenen Signalverlaufsdiagrammen abweichen.

Durch die Rotation des Werkzeugs 160 taucht die wenigstens eine Schneide 180 zum Zeitpunkt t₁ in den Lichtstrahl 140 ein und erzeugt eine zunächst bis zu einem Scheitelpunkt zunehmende Abschattung, bei der ein Spannungssignal U₁₈₀ von der Lichtempfangs-Einheit 130 erzeugt wird. Durch die kontinuierlich fortlaufende Rotation des Werkzeugs 160 nimmt danach die Abschattung der wenigstens einen Schneide 180 ab, bis die wenigstens eine Schneide 180 ab dem Zeitpunkt t2 keine Abschattung mehr in dem Lichtstrahl 140 erzeugt und nur noch das Spannungssignal U₁₆₀ von dem Werkzeug 160 von der Lichtempfangseinheit 130 erzeugt wird. Das Signalverlaufsdiagramm 200 gibt einen Spannungs-Zeit-Verlauf für eine komplette Umdrehung des Werkzeugs 160 um die Rotationsachse wieder.

Da sich in dem Lichtstrahl 140 keinerlei Störfaktoren, wie die lichtabsorbierenden oder -streuenden Partikel befinden, entsprechen die von der Lichtempfangs-Einheit 130 erzeugten Signale ausschließlich den Abschattungen des Werkzeugs 160 und/oder der wenigstens einen Schneide 180. Basierend auf einem Zusammenhang, beispielsweise einer Differenz zwischen dem Spannungssignal U₁₆₀ des Werkzeugs 160 und dem Spannungssignal U₁₈₀ der wenigstens einen Schneide 180 bestimmt die Verarbeitungseinheit 150 eine Länge der wenigstens einen Schneide. Da die Rotationsgeschwindigkeit so wie der Zusammenhang zwischen einer Abschattung und einer damit verbundenen Länge des die Abschattung erzeugenden Werkzeugs 160 und/oder der wenigstens einen Schneide 180 der Verarbeitungseinheit 150 bekannt sind, kann die Verarbeitungseinheit 150 zusätzlich oder alternativ eine Form der wenigstens einen Schneide 180 bestimmen.

Bei bisherigen Messungen zum Kontrollieren eines drehantreibbaren Werkzeugs wurde die Messung während der Achsbewegung ausgeführt. Das heißt, das Werkzeug wurde in den Lichtstrahl der Lichtschrankenanordnung hineingefahren, während das drehantreibbare Werkzeug rotiert. Die Messposition wurde zu einem Schaltsignal ausgelesen, wobei das Schaltsignal einer vorbestimmten teilweisen Abschattung oder kompletten Abschattung des Lichtstrahls der Lichtschrankenanordnung entspricht. Die Messposition bei dem Schaltsignal wurde dann mit einem Kalibrierwert verrechnet, es wurde eine sogenannte fliegende Messung ausgeführt. Die Länge des Werkzeugs wurde bestimmt, indem von der Messposition zum Schaltzeitpunkt die bekannte Lichtstrahlposition bei dem definierten Abschattungsgrad (Kalibrierwert) subtrahiert wurde.

Im Gegenteil zu dieser Vorgehensweise offenbart die vorliegende Anmeldung, dass eine Messung bei einer stehenden Achse ausgeführt wird. Dazu wird das Werkzeug 160 zunächst auf eine bestimmte Position relativ zu dem Lichtstrahl 140 der Lichtschrankenanordnung 110 eingestellt. Bei der eingestellten Position befindet sich das Werkzeug 160 in Fig. 2 bereits teilweise in dem Lichtstrahl 140 der Lichtschrankenanordnung 110. Alternativ kann das Werkzeug 160 auch außerhalb des Lichtstrahls 140 angeordnet werden. Entsprechend addieren sich die aktuelle Messposition und die Eintauchtiefe des Werkzeugs 160. Von dieser Summe wird die bekannte Lichtstrahlposition bei einem definierten Abschattungsgrad (Kalibrierwert) subtrahiert, um die Länge des Werkzeugs und/oder der wenigstens einen Schneide des Werkzeugs zu bestimmen.

Die Verarbeitungseinheit 150 ist weiter dazu eingerichtet, Informationen über das empfangene Signal, die Länge oder die Form der wenigstens einen Schneide 180 weiter an die numerische Steuerung der Werkzeugmaschine 170 bereitzustellen.

Anhand der in Fig. 2 gezeigten Vorgehensweise wird eine Länge und/oder Form der wenigstens einen Schneide 180 bestimmt. Ebenfalls kann eine Länge und/oder Form des Werkzeugs 160 bestimmt werden, wenn das Werkzeug 160 in den Lichtstrahl 140 in eine erste senkrecht zu dem Lichtstrahl 140 verlaufende Richtung verfahren wird, bis sich das Werkzeug 160 vollständig in dem Lichtstrahl 140 befindet oder eine komplette Abschattung des Lichtstrahls 140 verursacht. Anschließend wird das Werkzeug 160 in eine zweite entgegengesetzt zu der ersten Richtung verlaufende Richtung aus dem Lichtstrahl 140 heraus verfahren. Basierend auf den von der Lichtempfangs-Einheit 130 erzeugten Signalen bestimmt die Verarbeitungseinheit 150 die Länge und/oder Form des Werkzeugs 160. Unter der Länge des Werkzeugs 160 ist in Fig. 2 ein orthogonal zu dem Lichtstrahl 140 verlaufender Durchmesser des Werkzeugs 160 zu verstehen.

Alternativ oder zusätzlich ist eine Länge und/oder Form des Werkzeugs 160 und/oder der wenigstens einen Schneide vordefiniert. Die Verarbeitungs-Einheit 150 ist dazu eingerichtet, anhand eines Vergleichs der basierend auf dem Signal U₁₈₀ bestimmten Länge und/oder Form mit einer aus einer vorherigen Messung bestimmten Länge und/oder Form und/oder der vordefinierten Länge und/oder Form zu bestimmen, ob eine Störstelle des Werkzeugs 160 und/oder der wenigstens einen Schneide 180 vorliegt. Bei der Störstelle kann es sich um eine abgebrochene und/oder verbogene Schneide 180 und/oder ein verbogenes Werkzeug 160 handeln. Jegliche Abweichung des Ist-Zustands der wenigstens einen Schneide 180 und/oder des Werkzeugs 160 von einem ursprünglichen werksfrischen Zustand kann als Störstelle definiert und von der Verarbeitungseinheit 150 bestimmt werden. Alternativ kann ein Schwellenwert für einen Grad der Abweichung festgelegt werden. Liegt eine Abweichung unterhalb des Schwellenwerts, wird von einer noch akzeptablen Abweichung ausgegangen, sodass an das herzustellende Produkt gestellte Anforderungen eingehalten werden können. Übersteigt die Abweichung den Schwellenwert, muss das Werkzeug 160 repariert oder ausgetauscht werden. Die Verarbeitungseinheit 150 stellt Informationen über die Störstelle an die numerische Steuerung der Werkzeugmaschine 170 bereit, welche ein Anhalten der Werkzeugmaschine basierend auf der Information veranlasst.

Weiter ist die Verarbeitungseinheit 150 dazu eingerichtet, das Werkzeug 160 basierend auf der bestimmten Länge und/oder Form des Werkzeugs 160 und/oder der wenigstens einen Schneide 180 und/oder der Schneidenanzahl bei einer Vielzahl von Schneiden durch Abgleichen mit der vordefinierten Länge und/oder Form und/oder Schneidenanzahl eines Werkzeugs zu identifizieren.

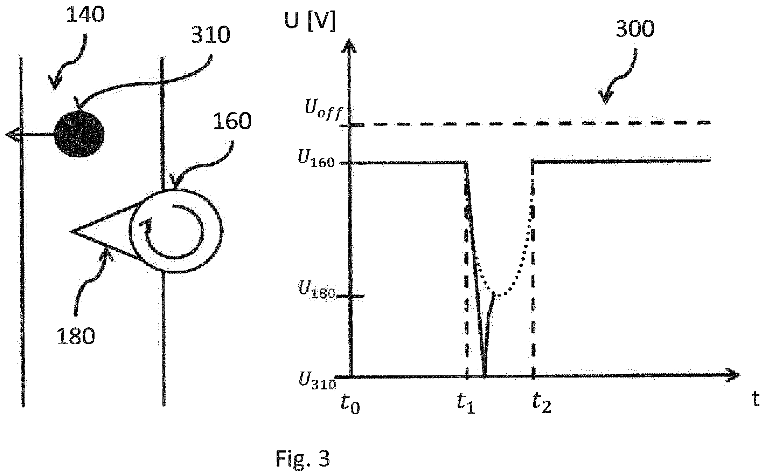

Die in Fig. 3 dargestellte Situation ähnelt der in Fig. 2 gezeigten Situation, mit dem Unterschied, dass sich in dem Lichtstrahl 140 ein Flüssigkeitstropen 310 zum Zeitpunkt des Messens eines Signalverlaufsdiagramms 300 befindet. Bei dem Flüssigkeitstropfen 310 wird hier angenommen, dass es sich beispielsweise um einen Öltropfen handelt, der nahezu lichtundurchlässig ist. Ein von dem Flüssigkeitstropfen 310 ausgehender Pfeil stellt dabei eine Bewegungsrichtung des Flüssigkeitstropfens 310 in dem Lichtstrahl 140 dar, wobei die Bewegungsrichtung in diesem Fall senkrecht zu dem Lichtstrahl 140 verläuft. Der Flüssigkeitstropfen 310 ist in Fig. 3 idealisiert als kreisförmig dargestellt, wobei dessen Form während dem Durchlaufen des Lichtstrahls 140 variieren kann. Weiter befindet sich der Flüssigkeitstropfen 310 in dem Zeitraum zwischen t₁ und t₂ in dem Lichtstrahl 140.

Wie in dem Signalverlaufsdiagramm 300 zu erkennen ist, wird das Spannungssignal U₁₈₀ (siehe gepunkteter Signalverlauf) der wenigstens einen Schneide 180 durch ein Spannungssignal U₃₁₀ des Flüssigkeitstropfens 310 überlagert. Würde die Verarbeitungseinheit 150 basierend auf dem Spannungssignal U₃₁₀ eine größte Länge und/oder Form der wenigstens einen Schneide 180 bestimmen, ohne zwischen einem Nutzsignalanteil und einem Störsignalanteil zu unterscheiden, würde diese deutlich zu der basierend auf dem Spannungssignal U₁₈₀ vorher bestimmten oder vordefinierten größten Länge und/oder Form abweichen. Entsprechend könnte voreilig beispielsweise auf einen Rundlauffehler geschlossen werden, was zu einem Anhalten der Werkzeugmaschine 170 oder einem Austauschen des Werkzeugs 160 führen würde.

Eine Geschwindigkeit, mit der sich der Flüssigkeitstropfen 310 bewegt, nimmt proportional mit einer Fallhöhe durch die Erdbeschleunigung zu. Typische Werte für die Bewegungsgeschwindigkeit des Flüssigkeitstropfens 310 sind dabei 80 m/min bei einer Fallhöhe von 0,1 m und bereits 118 m/min bei einer Fallhöhe von 0,2 m. Weiter bestimmt die Verarbeitungseinheit 150 basierend auf dem Spannungssignal U₁₈₀ einen Zusammenhang zwischen der Rotationsgeschwindigkeit und der proportional zu- oder abnehmenden Abschattung. Die durch den Flüssigkeitstropfen 310 erzeugte Abschattung nimmt pro Zeiteinheit schneller oder langsamer als die von dem Werkzeug 160 und der wenigstens einen Schneide 180 erzeugten Abschattung zu bzw. ab. Entsprechend ist die Verarbeitungseinheit 150 dazu eingerichtet, den Nutzsignalanteil und den Störsignalanteil des Spannungssignals U₁₈₀ zu bestimmen. Anhand des Nutzsignalanteils U₁₈₀ bestimmt die Verarbeitungseinheit 150 die Form und/oder Länge der wenigstens einen Schneide 180 und/oder die Schneidenanzahl des drehantreibbaren Werkzeugs 160.

Alternativ oder zusätzlich wird die Messung des Signalverlaufs mehrmals wiederholt. Da der Eintritt des Flüssigkeitstropfens 310 ein einmaliges Vorkommnis sein kann, ist die Verarbeitungseinheit 150 dazu eingerichtet, die Vielzahl von Signalverlaufsdiagrammen miteinander zu vergleichen und das Signalverlaufsdiagramm, bei dem der Flüssigkeitstropfen 310 in dem Lichtstrahl 140 gewesen ist, nicht zum Messen und Kontrollieren des Werkzeugs 160 und der wenigstens einen Schneide 180 zu verwenden.

Weiter ist die Verarbeitungseinheit 150 dazu eingerichtet, basierend auf dem bestimmten Nutzsignalanteil oder -anteilen einen Rundlauffehler des Werkzeugs 160 zu bestimmen. Weicht der Nutzsignalanteil oder die bestimmte Länge bei wiederholten Messungen um einen bestimmten Grenzwert voneinander ab, ist die Verarbeitungseinheit 150 dazu eingerichtet, eine Information über einen Rundlauffehler an die numerische Steuerung der Werkzeugmaschine 170 bereitzustellen.

Weist das Werkzeug 160 eine Vielzahl an Schneiden 180 auf, ist die Verarbeitungseinheit 150 dazu eingerichtet, für jede der Vielzahl an Schneiden 180 eine Länge und/oder Form basierend auf den zugehörigen Nutzsignalanteilen zu bestimmen. Weiter ist die Verarbeitungseinheit 150 dazu eingerichtet, basierend auf den Nutzsignalanteilen eine kürzeste und eine längste Schneide 180 zu bestimmen.

Wie bereits erwähnt, wird das Werkzeug 160 und/oder die wenigstens eine Schneide 180 an der ersten Messposition zum Messen und Kontrollieren des Werkzeugs 160 und/oder der wenigstens einen Schneide positioniert. Basierend auf den wiederholt ausgeführten Messungen ist die Verarbeitungseinheit 150 dazu eingerichtet, basierend auf den wiederholt bestimmten Nutzsignalanteilen, Störsignalanteilen und/oder empfangenen Signalen einen Messpositionsfehler zu bestimmen. Wird das Werkzeug 160 und/oder die wenigstens eine Schneide 180 fehlerhaft in dem Lichtstrahl 140 positioniert, führt der Messpositionsfehler zu einem fehlerbehafteten empfangenen Signal. Beispielsweise kann bei einem Messpositionsfehler der sonst kontinuierliche gekrümmte Verlauf des Spannungssignals einen Doppel-Höcker, also zwei zu dem Scheitelpunkt des Spannungssignals parallele Maxima aufweisen, ohne dass eine Verschmutzung vorliegen muss. Ein derartiger Verlauf des Spannungssignals wird von der Verarbeitungseinheit 150 erkannt. Eine Position des Lichtstrahls 140 und des Werkzeugs 160 und/oder der wenigstens einen Schneide 180 sind der Verarbeitungseinheit 150 bereits bekannt oder können durch diese bestimmt werden. Basierend auf dem ermittelten fehlerbehafteten Spannungssignal bestimmt die Verarbeitungseinheit 150 eine zweite Messposition, an die das Werkzeug 160 und/oder die wenigstens eine Schneide 180 verfahren wird. Dabei entspricht die zweite Messposition einer korrigierten Position, an welcher ein Doppelhöcker nicht mehr auftritt. Alternativ kann eine Radial-Messung, also eine Messung vom Inneren (z.B. dem Zentrum des Lichtstrahls 140) zum Äußeren (Rand) des Lichtstrahls 140 ausgeführt werden, bei der ein Schaltpunkt erst dann erzeugt wird, wenn anstelle des Doppel-Höckers ein sauberer Signalverlauf (z.B. Sinus-Verlauf) erkannt wird.

Um einem Messpositionsfehler zu erkennen, kann zusätzlich oder in einer weiteren Alternative die Signalform eines Werkzeugs im Neuzustand (trocken, sauber) aufgezeichnet und abgespeichert werden. Weicht die Signalform bei einer späteren Messung des Werkzeugs 160 um einen vorbestimmten Schwellenwert von der abgespeicherten Signalform ab, wird ein Reinigungsvorgang ausgeführt. Bei der Reinigung mit Luft können Verunreinigungen auf der wenigstens einen Schneide 160 des Werkzeugs 160 oder dem Werkzeug 160 selbst zurückbleiben. Eine Verlängerung der Zeit zum Reinigen mit Luft ist in diesen Fällen wirkungslos. Entsprechend müssen Störsignalanteile von Nutzsignalanteilen gefiltert/getrennt werden und Schaltpunkte/Messwerte nur vom Nutzsignal abgeleitet werden.

Eine weitere Möglichkeit, Messpositionsfehlern vorzubeugen, ist, Messungen nicht nur an einer Stelle des Werkzeugs 160, sondern über einen kurzen Abschnitt des Werkzeugs 160 (z.B. entlang einer in Bohrrichtung verlaufenden Länge des Werkzeugs 160) auszuführen. Verändert sich die Abschattung der wenigstens einen Schneide 180 des Werkzeugs 160, während eine Aufzeichnungsposition entlang der wenigstens einen Schneide 180 des Werkzeugs 160 verfahren wird, dann handelt es sich um wenigstens einen der drei nachfolgenden Fälle. Es handelt sich um eine Verunreinigung (z.B. Schmutzpartikel), die zu einer stärkeren Abschattung der wenigstens einen Schneide 180 des Werkzeugs 160 über einen kurzen Bereich führt. Es kann sich auch um einen Ausbruch handeln, der zu einer schwächeren Abschattung der wenigstens einen Schneide 180 des Werkzeugs 160 über den kurzen Bereich führt. Es kann sich auch um einen Eckradius handeln, bei dem die korrekte Messposition für die Längenmessung verlassen wird.

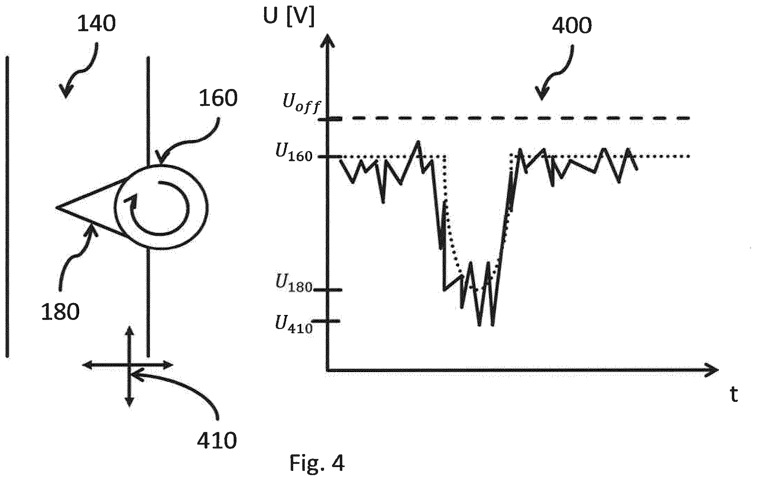

Bei den Messungen der Signalverlaufsdiagramme können weitere Einflüsse ein Vibrieren oder gar mehrfach auftretende Erschütterungen der Lichtschrankenanordnung 110 oder der Werkzeugmaschine 170 sein. Dies ist in Fig. 4 veranschaulicht, wobei das Vibrieren oder die Erschütterung in mehrere Raumrichtungen möglich ist, wie exemplarisch durch das Richtungskreuz 410 angedeutet. Die gepunktete Linie stellt das ungestörte Signal dar, welches von Störsignal 410 überlagert wird.

Gemäß der Störung 410 wird ein Signalverlaufsdiagramm 400 von der Lichtempfangs-Einheit 130 ausgegeben, das deutliche Schwankungen im Signalverlauf aufweist. Diese Schwankungen entsprechen dem Störsignalanteil, da eine klare Längen- und/oder Formbestimmung des Werkzeugs und/oder der wenigstens einen Schneide 180 nicht möglich ist, wenn das Signal nicht in den Nutzsignalanteil und den Störsignalanteil aufgeteilt wird. Eine Frequenz und/oder eine Amplitude des Werkzeugs 160 und/oder der wenigstens einen Schneide 180 können vordefiniert sein. Die Verarbeitungseinheit 150 ist dazu eingerichtet, basierend auf der vordefinierten Frequenz und/oder Amplitude den Nutzsignalanteil und/oder den Störsignalanteil aus dem Signal zu bestimmen. Mit anderen Worten trennt die Verarbeitungseinheit 150 das von der Lichtempfangs-Einheit 130 empfangene Signal in den Nutzsignalanteil, der wenigstens annähernd dem Spannungssignalanteil U₁₆₀ entspricht, und den Störsignalanteil, der wenigstens annähernd einem Spannungssignalanteil U₄₁₀ entspricht, auf. Basierend auf dem Nutzsignalanteil bestimmt die Verarbeitungseinheit 150 die Form und/oder Länge des Werkzeugs 160 und/oder der wenigstens einen Schneide 180.

Die Verarbeitungseinheit 150 ist dazu eingerichtet, basierend auf den Nutzsignalanteilen und/oder Störsignalanteilen eine Verunreinigung und/oder eine Störstelle des Werkzeugs 160 und/oder der wenigstens einen Schneide 180 zu bestimmen.

Beim Einsatz der Werkzeugmaschine 170 bzw. des Werkzeugs 160 mit der wenigstens einen Schneide 180 entstehen beispielsweise beim Bohren von Löchern in zu bearbeitende Materialien Späne, welche an der Werkzeugmaschine 170, dem Werkzeug 160 und/oder der wenigstens einen Schneide 180 haften können. Zum Entfernen von Späne oder anderen Restprodukten, die weder an der Werkzeugmaschine 170, dem Werkzeug 160, der wenigstens einen Schneide 180 oder dem zu bearbeitenden Material erwünscht sind, kann Druckluft oder ein Fluid, wie eine Kühlflüssigkeit oder eine Reinigungsflüssigkeit eingesetzt werden. Ferner kann Kühlflüssigkeit auch unabhängig von einer Verschmutzung eingesetzt werden, um die Werkzeugmaschine 170, das Werkzeug 160 und/oder die wenigstens eine Schneide zu kühlen.

Wie in Fig. 3 gezeigt, führt ein Flüssigkeitstropfen 310 in dem Lichtstrahl 140 bei einer Messung des Werkzeugs 160 und/oder der wenigstens einen Schneide 180 zu einem Spannungssignal U₃₁₀, welches deutlich von dem Spannungssignal U₁₈₀ abweicht und somit das von der Lichtempfangs-Einheit 130 empfangene Signal stört. Ähnlich verhält es sich, wenn beispielsweise Späne an dem Werkzeug 160 und/oder der wenigstens einen Schneide 180 haftet, da diese ebenfalls zu einer Störung des von der Lichtempfangs-Einheit 130 empfangenen Signals führt.

Wie bereits erläutert, ist die Verarbeitungseinheit 150 dazu eingerichtet, den Nutzsignalanteil und den Störsignalanteil des empfangenen Signals zu bestimmen. Ermittelt die Verarbeitungseinheit 150, dass beispielsweise der Nutzsignalanteil der wenigstens einen Schneide 180 einer vordefinierten Länge der wenigstens einen Schneide 180 entspricht, wird geschlussfolgert, dass sich die wenigstens eine Schneide 180 in einem einwandfreien Zustand befindet. Im Umkehrschluss bedeutet dies, dass das Spannungssignal U₃₁₀ durch eine Verunreinigung wie Späne oder den Flüssigkeitstropfen 310 entstanden ist. Die Verarbeitungseinheit 150 ist dazu eingerichtet, eine Verunreinigung des Werkzeugs 160 und/oder der wenigstens einen Schneide 180 basierend auf dem Störsignalanteil zu bestimmen und eine Reinigungssignal an die numerische Steuerung der Werkzeugmaschine 170 bereitzustellen. Die numerische Steuerung der Werkzeugmaschine 170 ist dazu eingerichtet, basierend auf dem von der Verarbeitungseinheit 150 bereitgestellten Reinigungssignal eine Reinigung des Werkzeugs 160 und/oder der wenigstens einen Schneide bzw. der kompletten Anordnung der Werkzeugmaschine 170 zu veranlassen. Die Reinigung wird mit Hilfe von Druckluft, Reinigungsflüssigkeit (beispielsweise Wasser) und/oder Kühlmittel ausgeführt, welche durch eine weitere Reinigungseinheit beispielsweise bereitgestellt wird. Die numerische Steuerung der Werkzeugmaschine 170 kann über die Verarbeitungseinheit 150 oder direkt an die Werkzeugmaschine 170 und/oder die Lichtschrankenanordnung 110 ein Stop-Signal, um während des Reinigungsprozesses ein Messen zu unterbrechen, und ein Start-Signal zum erneuten Starten der Werkzeugmaschine 170 und/oder der Lichtschrankenanordnung 110 senden.

Die Verarbeitungseinheit ist ferner dazu eingerichtet, basierend auf dem Nutzsignalanteil und dem Störsignalanteil eine Störstelle des Werkzeugs 160 und/oder der wenigstens einen Schneide 180 zu bestimmen. Eine Störstelle kann eine abgebrochene, verkürzte und/oder gekrümmte Schneide 180 oder ein deformiertes Werkzeug sein. Ein eine Störstelle aufweisendes Werkzeug 160 und/oder wenigstens eine Schneide 180 kann bei weiterem Einsatz in der Werkzeugmaschine 170 zu fehlerbehafteten Produktresultaten und Ausschüssen führen.

Bricht beispielsweise ein Stück einer Spitze der wenigstens einen Schneide 180 ab, ist der Nutzsignalanteil des von der Lichtempfangs-Einheit 130 empfangenen Signals kleiner und somit auch die bestimmte Länge der wenigstens einen Schneide 180. Ermittelt die Verarbeitungseinheit 150 eine Störstelle des Werkzeugs und/oder der wenigstens einen Schneide 180, stellt die Verarbeitungseinheit ein Warnsignal an die numerische Steuerung der Werkzeugmaschine 170 bereit. Basierend auf dem Warnsignal hält die numerische Steuerung der Werkzeugmaschine 170 die Werkzeugmaschine 170 und/oder die Lichtschrankenanordnung 110 an oder veranlasst einen Bearbeitungsstopp der Werkzeugmaschine 170 und/oder der Lichtschrankenanordnung 110, um fehlerbehaftete Produktresultate und Ausschüsse zu verhindern.

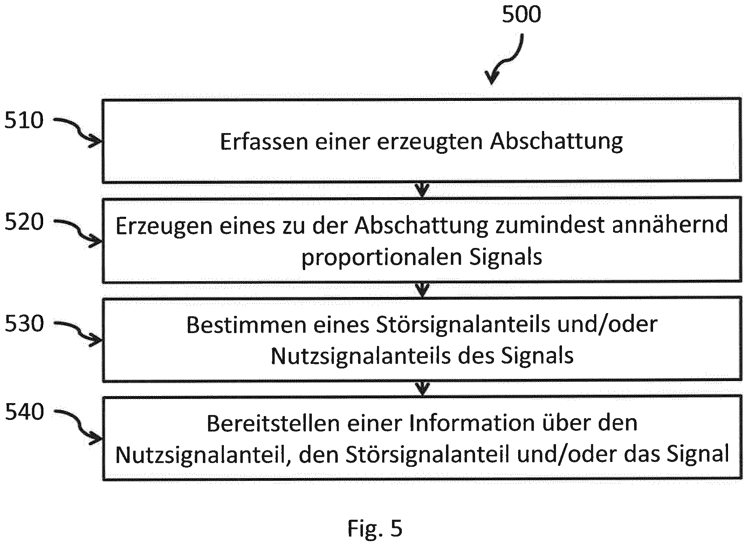

Fig. 5 veranschaulicht ein Verfahren 500 zum Kontrollieren des Werkzeugs 160 und/oder der wenigstens einen Schneide 180. Das Verfahren wird nachfolgend zur besseren Veranschaulichung von der in Fig. 1 gezeigten Anordnung der Lichtschrankenanordnung 110, der Werkzeugmaschine 170 mit dem Werkzeug 160 und der wenigstens einen Schneide 180, sowie der Verarbeitungseinheit 150 ausgeführt, ist jedoch nicht auf diese Anordnung oder Zuordnung von Verfahrensschritten auf bestimmte Einheiten limitiert.

In einem ersten Schritt 510 wird eine durch das Werkzeug 160 und/oder die wenigstens eine Schneide 180 erzeugte Abschattung des Lichtstrahls 140 bei der ersten Messposition durch die Lichtempfangs-Einheit 130 erfasst. In einem nächsten Schritt 520 empfängt die Verarbeitungseinheit 150 durch die Lichtempfangs-Einheit 130 erzeugtes zu der Abschattung zumindest annähernd proportionale Signale. Anschließend wird in Schritt 530 ein Störsignalanteil und/oder Nutzsignalanteil der empfangenen Signale durch die Verarbeitungseinheit 150 bestimmt und in Schritt 540 in Form einer Information über den Nutzsignalanteil, den Störsignalanteil und die empfangenen Signale an die numerische Steuerung der Werkzeugmaschine 170 bereitgestellt.

Der Schritt 530 des Bestimmens des Nutzsignalanteils und/oder des Störsignalanteils kann Zwischenschritte, wie sie bereits zuvor oder nachfolgend für die Verarbeitungseinheit 150 beschrieben wurde/ werden, umfassen.

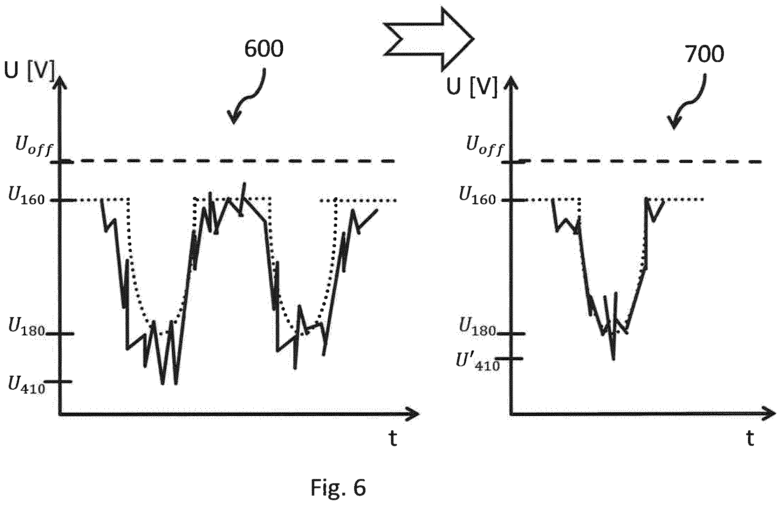

Fig. 6 zeigt ein Signalverlaufsdiagramm 600 einer mehrfachen Messung des Spannungssignals U₁₈₀ der wenigstens einen Schneide 180, wobei die Störung 410, wie beispielsweise ein Vibrieren oder eine Erschütterung die Messung stört und zu dem Spannungssignal U₄₁₀ führt. Um eine Störung des Spannungssignals zu minimieren, ist die Verarbeitungseinheit 150 dazu eingerichtet, die mehrfach erfassten Spannungssignale zu überlagern. Weiter ist die Verarbeitungseinheit 150 dazu eingerichtet, einen geeigneten Blockfilter auf die überlagerten Spannungssignale anzuwenden, um die Störung, wie in dem Signalverlaufsdiagramm 700 gezeigt, zu minimieren.

Basierend auf den überlagerten und mit dem geeigneten Blockfilter bearbeiteten Spannungssignal bestimmt die Verarbeitungseinheit 150 den Nutzsignalanteil und/oder den Störsignalanteil des überlagerten und mit dem geeigneten Blockfilter bearbeiteten Spannungssignals.

Alternativ oder zusätzlich bestimmt die Verarbeitungseinheit 150 bereits anhand der Spannungssignale des Signalverlaufsdiagramms 600 jeweils einen Nutzsignalanteil und/oder Störsignalanteil der Spannungssignale. Die Nutzsignalanteile und/oder Störsignalanteile werden dann von der Verarbeitungseinheit 150 überlagert und der geeignete Blockfilter wird angewendet.

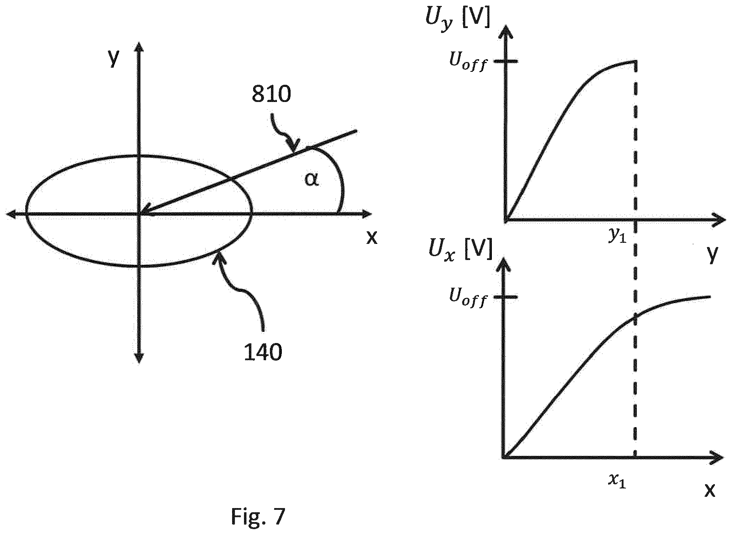

Die Lichtempfangs-Einheit 130 erzeugt zu der Abschattung des Werkzeugs 160 und/oder der wenigstens einen Schneide 180 proportionale Signale. Dabei wird zunächst angenommen, dass der Lichtstrahl 140 zumindest annähernd kreisförmig ist, sodass es keinen Unterschied bezüglich des in den Lichtstrahl eingetauchten Wegstücks und der damit verbundenen Abschattung macht. In der Praxis kann jedoch nicht immer von einem annähernd kreisförmigen Lichtstrahl 140 ausgegangen werden. In Fig. 7 ist ein elliptischer Lichtstrahl 140 gezeigt, welcher in eine x-Richtung größer als in eine y-Richtung ist. Weiter sind zwei Signalverlaufsdiagramme in Fig. 7 gezeigt. Aufgrund der elliptischen Form des Lichtstrahls 140 unterscheidet sich der Signalverlauf deutlich, wenn das Werkzeug 160 und/oder die wenigstens eine Schneide 180 lediglich nur auf der X-Achse oder nur auf der y-Achse zu einem Zentrum des Lichtstrahls 140 gefahren wird.

Da ein Durchmesser des Lichtstrahls in Fig. 7 in die y-Richtung kleiner als ein Durchmesser in die x-Richtung ist, wird der Lichtstrahl 140 bei einer Distanz y₁ in der y-Richtung mehr als bei einer Distanz x₁ in die x-Richtung abgeschattet, wobei x₁=y₁ ist. Mit anderen Worten, müsste das Werkzeug 160 und/oder die wenigstens eine Schneide 180 in x-Richtung weiter verfahren werden als in y-Richtung, um eine gleichgroße Abschattung und damit ein gleichgroßes zumindest annähernd proportionales Signal durch die Lichtempfangs-Einheit 130 zu erzeugen.

Um einen nicht idealen symmetrischen Lichtstrahl 140 bei dem Messen und Kontrollieren des Werkzeugs 160 und/oder der wenigstens einen Schneide zu berücksichtigen, ist die Verarbeitungseinheit 150 dazu eingerichtet, eine Kalibrierfunktion beim Bestimmten der Länge und/oder der Form des Werkzeugs 160 und/oder der wenigstens einen Schneide 180 zu verwenden. Die Kalibrierfunktion kann von der Verarbeitungseinheit 150 während einer Initialisierungsphase bestimmt werden oder bereits vordefiniert sein.

Wird das Werkzeug 160 von einer Richtung 810 in den Lichtstrahl 140 hineinverfahren, würde ohne die Kalibrierfunktion eine bestimmte Länge und/oder Form des Werkzeugs und/oder der wenigstens einen Schneide beispielsweise nicht mit einer vordefinierten Form und/oder Länge des Werkzeugs 160 übereinstimmen und die Verarbeitungseinheit 150 könnte irrtümlicherweise eine Störstelle oder einen Längenmessfehler bestimmen. Durch das Verwenden der Kalibrierfunktion durch die Verarbeitungseinheit 150, die einen Zusammenhang zwischen einer durch das Werkzeug 160 und/oder der wenigstens einen Schneide erzeugten Abschattung und einem zugehörigen annähernd proportionalen Signal wiedergibt, wird das irrtümliche Bestimmen einer Störstelle oder eines Längenmessfehlers bei einem nicht ideal symmetrischen Lichtstrahl 140 vermieden.

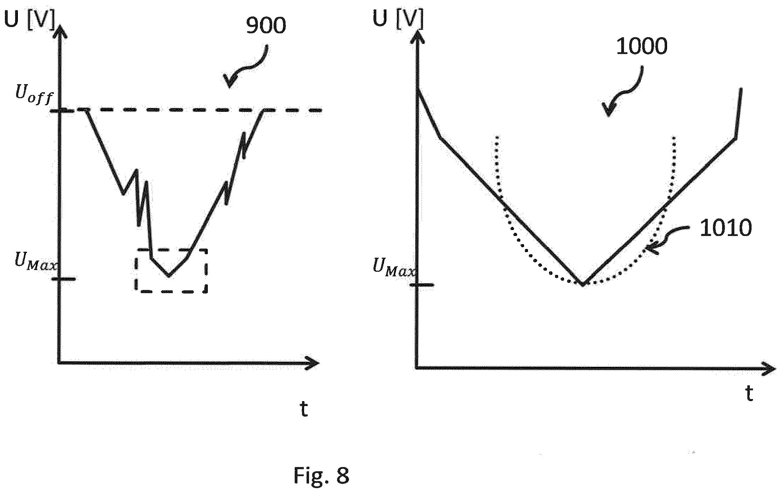

Um die Länge des Werkzeugs 160 und/oder der wenigstens einen Schneide 180 zu bestimmen, ist die Verarbeitungseinheit 150 dazu eingerichtet, einen symmetrischen oder annähernd symmetrischen Bereich des von der Lichtempfangs-Einheit 130 empfangenen Spannungssignals zu bestimmen, um ein Maximum des Spannungssignals zu bestimmen. Wie in dem Fig. 8 gezeigten Signalverlaufsdiagramm 900 zu sehen ist, ist das Spannungssignal nicht symmetrisch. Die Verarbeitungseinheit 150 ermittelt einen Bereich des Spannungssignals, welcher annähernd symmetrisch ist, wie beispielhaft durch das gestrichelte Rechteck in dem Signalverlaufsdiagramm 900 gezeigt ist. Das Signalverlaufsdiagramm 1000 zeigt einen Ausschnitt des Signalverlaufsdiagramms 900, welcher dem Bereich des gestrichelten Rechtecks entspricht.

Wie in dem Signalverlaufsdiagramm 1000 gezeigt ist, ist dieser Bereich des Spannungssignals symmetrisch oder annähernd symmetrisch und die Verarbeitungseinheit 150 bestimmt das Maximum innerhalb dieses Bereichs. Basierend auf dem bestimmten Maximum bestimmt die Verarbeitungseinheit 150 anschließend die Länge des Werkzeugs 160 und/oder der wenigstens einen Schneide 180.

Alternativ fittet die Verarbeitungseinheit 150 den symmetrischen oder annähernd symmetrischen Bereich des Spannungssignals mit einem Fit 1010, um das Maximum zu bestimmen. Der Fit 1010 ist eine Sinusregression, eine Polynomregression, eine Gauß-Regression und/oder eine exponentielle Glättung.

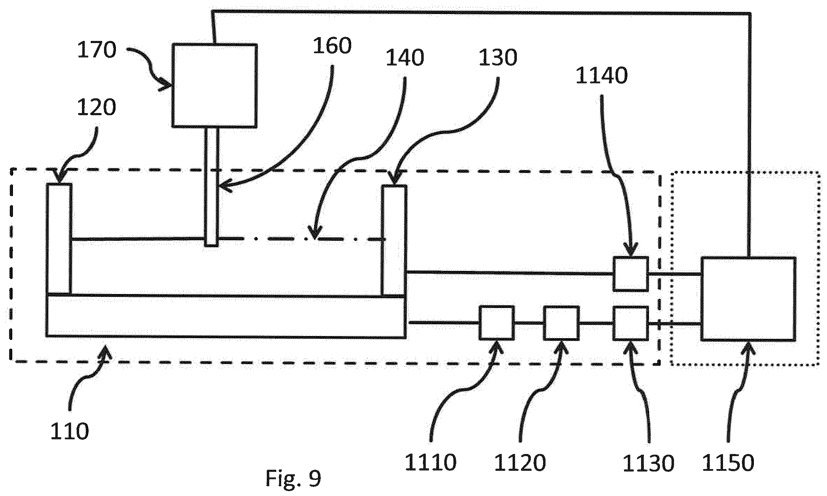

Fig. 9 zeigt eine weitere Ausführung mit einer Verarbeitungseinheit 1150, wobei die Verarbeitungseinheit 1150 über eine erste Digital-Schnittstelle 1140, die zum Senden von Statusinformationen der Lichtschrankenanordnung an die Verarbeitungseinheit und Empfangen von Steuersignalen von der Verarbeitungseinheit eingerichtet ist, mit der Lichtschrankenanordnung 110 verbunden. Parallel zur ersten Digital-Schnittstelle 1140 ist die Verarbeitungseinheit 1150 über eine zweite Digital-Schnittstelle 1130, über eine Umwandel-Einheit 1120 und einer Tiefpassfilter-Einheit 1110 mit der Lichtempfangs-Einheit 130 verbunden ist. Die erste Digital-Schnittstelle 1140, die zweite Digital-Schnittstelle 1130, die Umwandel-Einheit 1120 und die Tiefpassfilter-Einheit 1110 sind in die Lichtschrankenanordnung 110 integriert wie durch die gestrichelte Linie veranschaulicht ist, wobei die erste Digital-Schnittstelle 1140 und/oder die zweite Digital-Schnittstelle 1130 kabelgebunden mit der Verarbeitungseinheit 1150 verbunden ist, aber auch drahtlos mit dieser verbunden sein kann. Mit Hilfe der Tiefpassfilter-Einheit 1110 können Frequenzen des von der Lichtempfangs-Einheit 130 gesendeten analogen Signals, die höher als eine bestimmte Grenzfrequenz sind, gefiltert werden und ein von hochfrequenten Störsignalen bereinigtes analoges Signal weiter an eine Umwandel-Einheit 1120, die zum Umwandeln der gefilterten analogen Signale in proportionale gefilterte digitale Signale eingerichtet ist, geleitet werden. Die gefilterten digitalen Signale werden von der Umwandel-Einheit 1120 an die zweite Digital-Schnittstelle 1130 geleitet werden. Die Digital-Schnittstelle 1130 ist kabelgebunden mit der Verarbeitungseinheit 1150 verbunden, kann aber auch drahtlos mit dieser verbunden sein. Die Verarbeitungseinheit 1150 ist, wie bereits zuvor beschrieben, dazu eingerichtet, einen Nutzsignalanteil und einen Störsignalanteil des digitalen Signals zu bestimmen und eine Information über den Nutzsignalanteil, den Störsignalanteil und/oder das digitale Signal weiter an die numerische Steuerung der Werkzeugmaschine 170 bereitzustellen.

Eine Abtastrate der zweiten Digital-Schnittstelle 1130 zum Abtasten des gefilterten analogen Signals wird auf eine Eintauchgeschwindigkeit in den Lichtstrahl 140, eine Eintauchtiefe, eine Eintauchrichtung, eine Drehzahl und/oder eine Schneidenanzahl des Werkzeugs 160 und/oder der wenigstens einen Schneide eingestellt.

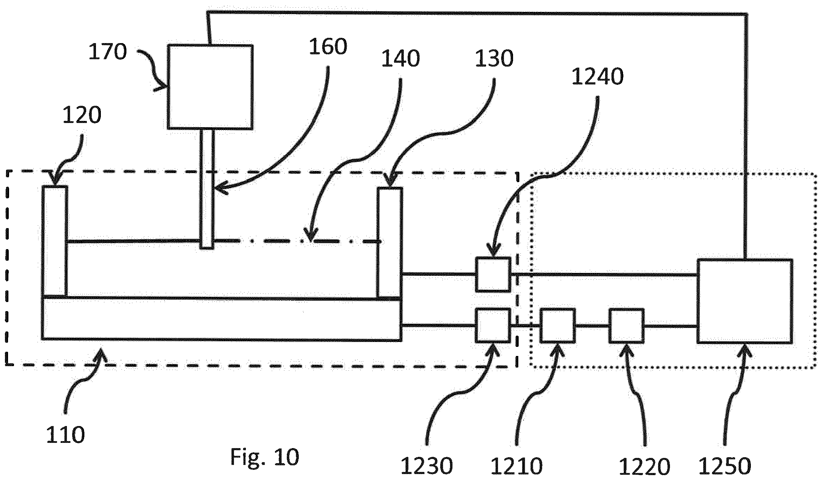

Fig. 10 zeigt eine weitere Ausführung mit einer Verarbeitungseinheit 1250, wobei die Verarbeitungseinheit 1250 über eine Digital-Schnittstelle 1240 und eine Analog-Schnittstelle 1230 mit der Lichtschrankenanordnung 110 verbunden ist. Die Digital-Schnittstelle 1240 ist zum Senden von Statusinformationen der Lichtschrankenanordnung 110 an die Verarbeitungseinheit 1250 und Empfangen von Steuersignalen von der Verarbeitungseinheit 1250 eingerichtet. Bei dieser Ausführung wird ein analoges von der Lichtempfangs-Einheit 130 erzeugtes zu der Abschattung zumindest annähernd proportionales Signal an eine Analog-Schnittstelle 1230 weitergeleitet. Die Analog-Schnittstelle 1230 sendet das analoge Signal als analog-differentielles Signal weiter an eine Tiefpassfilter-Einheit 1210, die zum Filtern von Frequenzanteilen des analogen Signals, die höher als eine vorbestimmte Grenzfrequenz sind, eingerichtet ist. Das gefilterte analoge Signal wird von der Tiefpassfilter-Einheit 1210 weiter an eine Umwandel-Einheit 1220 gesendet, welche wiederum das gefilterte analoge Signal in ein gefiltertes digitales Signal umwandelt. Die Umwandel-Einheit 1220 sendet das gefilterte digitale Signal an die Verarbeitungseinheit 1250. In der in Fig. 10 gezeigten Ausführung sind die Digital-Schnittstelle 1240 und die Analog-Schnittstelle 1230 in die Lichtschrankenanordnung 110 integriert, wie durch die gestrichelte Linie gezeigt ist. Die Tiefpassfilter-Einheit 1210 und die Umwandel-Einheit 1220 sind in die Verarbeitungseinheit 1250 integriert, wie durch die gepunktete Linie veranschaulicht ist.

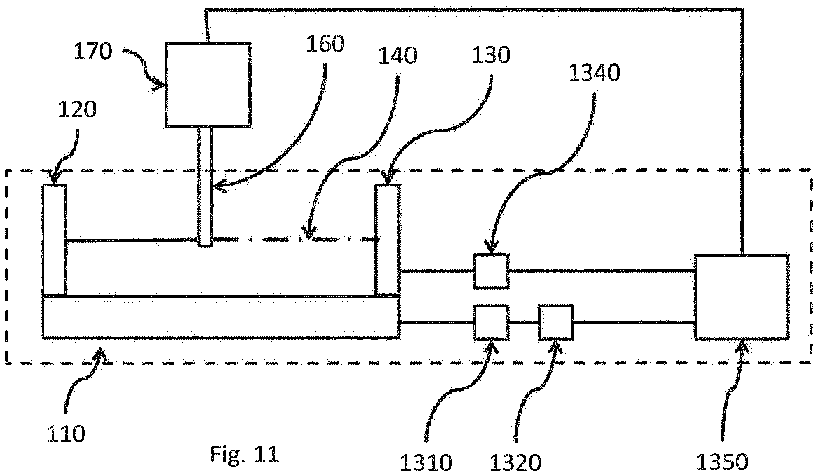

Fig. 11 zeigt eine weitere Ausführung mit einer Verarbeitungseinheit 1350, wobei die Verarbeitungseinheit 1350 in der Lichtschrankenanordnung 110 integriert ist. Die Verarbeitungseinheit 1350 ist über eine Digital-Schnittstelle 1340, die zum Senden von Statusinformationen der Lichtschrankenanordnung 110 an die Verarbeitungseinheit 1350 und Empfangen von Steuersignalen von der Verarbeitungseinheit 1350 eingerichtet ist, mit der Lichtschrankenanordnung 110 verbunden. Bei dieser Ausführung wird ein analoges von der Lichtempfangs-Einheit 130 erzeugtes zu der Abschattung zumindest annähernd proportionales Signal direkt an eine Tiefpassfilter-Einheit 1310 weitergeleitet, die zum Filtern von Frequenzanteilen des analogen Signals, die höher als eine vorbestimmte Grenzfrequenz sind, eingerichtet ist. Das gefilterte analoge Signal wird von der Tiefpassfilter-Einheit 1310 weiter an eine Umwandel-Einheit 1320 gesendet, welche wiederum das gefilterte analoge Signal in ein gefiltertes digitales Signal umwandelt. Die Umwandel-Einheit 1320 sendet das gefilterte digitale Signal an die Verarbeitungseinheit 1350. In der in Fig. 11 gezeigten Ausführung ist die Verarbeitungseinheit 1350, die Digital-Schnittstelle 1340, die Tiefpassfilter-Einheit 1310 und die Umwandel-Einheit 1320 in die Lichtschrankenanordnung 110 integriert, wie durch die gestrichelte Linie gezeigt ist.

Die Verarbeitungseinheiten 1150, 1250, 1350 können dieselben Merkmale wie die Verarbeitungseinheit 150 aufweisen. Es wurden für die Verarbeitungseinheiten 1150, 1250, 1350 lediglich zusätzliche ergänzende Merkmale beschrieben.

Eine Verarbeitungseinheit 150, 1150, 1250, 1350 der vorangegangenen beschriebenen Ausführungen kann zusätzlich mit einer Wertespeicher-Einheit verbunden werden. Die Wertespeicher-Einheit ist dazu eingerichtet, einen Nutzsignalanteil und/oder einen Störsignalanteil eines von der Lichtempfangs-Einheit 130 empfangenen Signals zu speichern und wiederzugeben. Zusätzlich kann die Wertespeicher-Einheit dazu eingerichtet sein, eine durch die Verarbeitungseinheit 150, 1150, 1250, 1350 bestimmte Länge und/oder Form des Werkzeugs 160 und/oder der wenigstens einen Schneide 180, der Eintauchtiefe einzelner Schneiden, der Abschattungszeit einzelner Schneiden und die Kalibrierfunktion, sowie die gefitteten Signalverlaufsdiagramme zu speichern. Zusätzlich kann die Wertespeicher-Einheit dazu eingerichtet sein, die von der numerischen Steuerung der Werkzeugmaschine 170 erhaltenen werkzeugbezogenen Informationen zu speichern, wie der Eintauchgeschwindigkeit, der Eintauchrichtung, der Schneidenanzahl, der Drehzahl, der Form und/oder der Länge des drehantreibbaren Werkzeugs, sowie einer aufgabenspezifischen Auswertevorschrift.

Eine Abtastrate der Digital-Schnittstelle 1130 und/oder der Umwandel-Einheit 1220, 1320 zum Abtasten des analogen Signals/ gefilterten analog-differenziellen Signals wird auf eine Eintauchgeschwindigkeit in den Lichtstrahl 140, eine Eintauchtiefe, eine Eintauchrichtung, eine Drehzahl und/oder eine Schneidenanzahl des Werkzeugs 160 und/oder der wenigstens einen Schneide 180 eingestellt.

## Patentansprüche

1. Vorrichtung, umfassend eine Verarbeitungseinheit (150, 1150, 1250) zum Messen und Kontrollieren eines drehantreibbaren Werkzeugs (160), und eine mit der Verarbeitungseinheit verbundene Lichtschrankenanordnung (110), die eine Lichtsende-Einheit (120) und eine Lichtempfangs-Einheit (130) umfasst, wobei die Verarbeitungseinheit dazu eingerichtet ist, von der Lichtempfangs-Einheit (130) zu einer durch das drehantreibbare Werkzeug (160) und/oder wenigstens einer Schneide (180) des drehantreibbaren Werkzeugs erzeugten Abschattung zumindest annähernd proportionale Signale an einer ersten Messposition zu empfangen;
wobei die Verarbeitungseinheit (150, 1150, 1250) zum Auswerten der empfangenen Signale und zum Senden von Steuersignalen an die Lichtschrankenanordnung (110) eingerichtet ist, wobei die Verarbeitungseinheit (150, 1150, 1250) für das Auswerten der empfangenen Signale zur Durchführung der folgenden Schritte eingerichtet ist:
- wiederholtes Bestimmen eines Nutzsignalanteils des empfangenen Signals;
- Überlagern der wiederholt bestimmten Nutzsignalanteile;
- Anwenden eines Blockfilters auf die überlagerten Nutzsignalanteile und Bestimmen eines repräsentativen Werts für die Nutzsignalanteile basierend auf den überlagerten Nutzsignalanteilen;
- Bereitstellen einer Information über den zuvor bestimmten repräsentativen Wert für Nutzsignalanteile an eine numerische Steuerung einer Werkzeugmaschine (170);
- Bestimmen einer Form und/oder einer Länge und/oder einer Schneidenzahl des drehantreibbaren Werkzeugs (160) basierend auf dem repräsentativen Wert für die Nutzsignalanteile und/oder Bestimmen einer Form und/oder einer Länge der wenigstens einen Schneide (180) basierend auf dem repräsentativen Wert für die Nutzsignalanteile;
- Bereitstellen einer Information über die zuvor bestimmte Form und/oder Länge und/oder die Schneidenzahl des drehantreibbaren Werkzeugs (160) an die numerische Steuerung der Werkzeugmaschine (170) und/oder Bereitstellen einer Information über die zuvor bestimmte Form und/oder Länge der wenigstens einen Schneide (180) an die numerische Steuerung der Werkzeugmaschine (170).

2. Vorrichtung nach Anspruch 1, wobei eine Frequenz und/oder Amplitude des Signals vordefiniert sind, wobei die Verarbeitungseinheit (150, 1150, 1250) dazu eingerichtet ist, basierend auf der vordefinierten Frequenz und/oder Amplitude den Nutzsignalanteil zu bestimmen.

3. Vorrichtung nach Anspruch 1, wobei die Verarbeitungseinheit (150, 1150, 1250) dazu eingerichtet ist, die wiederholt bestimmten Nutzsignalanteile miteinander zu vergleichen und basierend auf dem Vergleich einen Messpositionsfehler zu bestimmen, wobei die Verarbeitungseinheit (150, 1150, 1250) dazu eingerichtet ist, basierend auf dem Messpositionsfehler eine zweite Messposition zu bestimmen, wobei die Lichtempfangs-Einheit ein zu dem durch das drehantreibbare Werkzeug (160) und/oder die wenigstens eine Schneide (180) des drehantreibbaren Werkzeugs (160) erzeugten Abschattung zumindest annähernd proportionales Signal an der zweiten Messposition erzeugt.

4. Vorrichtung nach Anspruch 1, wobei der Blockfilter ein Medianwertfilter, ein Minimumwertfilter, ein Maximumwertfilter, ein Mittelwertfilter oder eine Kombination dieser Filter ist.

5. Vorrichtung nach Anspruch 1, wobei die Verarbeitungseinheit (150, 1150, 1250) dazu eingerichtet ist, zum Bestimmen der Form und/oder der Länge auf eine vordefinierte Kalibrierfunktion zuzugreifen, die einen Zusammenhang zwischen einer durch das drehantreibbare Werkzeug (160) und/oder die wenigstens eine Schneide (180) erzeugten Abschattung und einem zugehörigen zumindest annähernd proportionalen Signal angibt.

6. Vorrichtung nach Anspruch 1, wobei die Verarbeitungseinheit (150, 1150, 1250) dazu eingerichtet ist, basierend auf der bestimmten Schneidenanzahl und/oder Form und/oder Länge des drehantreibbaren Werkzeugs (160) eine Werkzeugidentifikation durch Abgleichen der bestimmten Schneidenanzahl und/oder Form und/oder Länge mit einer vordefinierten Schneidenanzahl und/oder Form und/oder Länge bekannter Werkzeuge auszuführen.

7. Vorrichtung nach Anspruch 1, wobei die Verarbeitungseinheit dazu (150, 1150, 1250) eingerichtet ist, ein lokales Maximum der Abschattung des drehantreibbaren Werkzeugs (160) und/oder der wenigstens einen Schneide (180) zu bestimmen, um eine Länge des drehantreibbaren Werkzeugs (160) und/oder der wenigstens einen Schneide (180) durch Verwenden der vordefinierten Kalibrierfunktion zu bestimmen, und eine Information über die Länge des drehantreibbaren Werkzeugs und/oder der wenigstens einen Schneide an die numerische Steuerung der Werkzeugmaschine (170) bereitzustellen.

8. Vorrichtung nach Anspruch 7, wobei die Verarbeitungseinheit dazu (150, 1150, 1250) eingerichtet ist, einen oder mehrere symmetrische oder annähernd symmetrische Signalbereiche des repräsentativen Werts für die Nutzsignalanteile zu bestimmen, den einen oder die mehreren symmetrischen oder annähernd symmetrischen Signalbereich oder Signalbereiche mit einer Sinusregression, einer Polynomregression, einer Gauß-Regression und/oder einer exponentiellen Glättung zu fitten und ein lokales Maximum in dem mit einer Sinusregression, einer Polynomregression, einer Gauß-Regression und/oder einer exponentiellen Glättung gefitteten Signalbereich oder Signalbereichen zu bestimmen.

9. Vorrichtung nach Anspruch 8, wobei die Verarbeitungseinheit (150, 1150, 1250) dazu eingerichtet ist, das lokale Maximum mittels Spitzenwert-Detektion zu bestimmen.

10. Vorrichtung nach einem der vorangegangen Ansprüche, wobei die Verarbeitungseinheit (150, 1150, 1250) dazu eingerichtet ist, basierend auf dem repräsentativen Wert für den Nutzsignalanteil eine Verunreinigung und/oder eine Störstelle des drehantreibbaren Werkzeugs (160) oder der wenigstens einen Schneide (180) zu bestimmen,
wobei, falls die Verarbeitungseinheit (150, 1150, 1250) eine Verunreinigung bestimmt, die Verarbeitungseinheit ferner dazu eingerichtet ist, eine Information über ein Reinigungssignal zur Reinigung des verunreinigten drehantreibbaren Werkzeugs (160) und/oder der wenigstens einen Schneide (180) an die numerische Steuerung der Werkzeugmaschine (170) bereitzustellen,
wobei, falls die Verarbeitungseinheit (150, 1150, 1250) eine Störstelle bestimmt, die Verarbeitungseinheit (150, 1150, 1250) ferner dazu eingerichtet ist eine Information über ein Warnsignal an die numerische Steuerung der Werkzeugmaschine (170) bereitzustellen.

11. Vorrichtung nach einem der vorangegangen Ansprüche, wobei das drehantreibbare Werkzeug (160) eine Vielzahl von Schneiden aufweist, die Abschattungen des Lichtstrahls erzeugen, wobei die Lichtempfangs-Einheit zu jeder der Abschattungen ein dieses wiedergebendes wenigstens annähernd proportionales Signal erzeugt.

12. Vorrichtung nach Anspruch 1, wobei die Verarbeitungseinheit (150, 1150, 1250) dazu eingerichtet ist, basierend auf dem repräsentativen Wert für die Nutzsignalanteilen eine kürzeste und eine längste Schneide zu identifizieren und eine Information über die identifizierte kürzeste und längste Schneide an die numerische Steuerung der Werkzeugmaschine bereitzustellen.

13. Vorrichtung nach dem Anspruch 12, wobei die Verarbeitungseinheit dazu eingerichtet ist, basierend auf der identifizierten kürzesten und längsten Schneide einen Rundlauffehler des drehantreibbaren Werkzeugs zu ermitteln.

14. Vorrichtung nach einem der vorangegangenen Ansprüche, wobei die Verarbeitungseinheit (150, 1150, 1250) dazu eingerichtet ist, die Nutzsignalanteile mittels einer Rundlaufanalyse, Frequenzanalyse, Analyse von Crestfaktoren, Einzelimpulsen und/oder quadratischen Mittel-, RMS-, Leistungswerten auszuwerten und Kennzahlen bezüglich eines Zustands einer Spindel und/oder eines Spindellagers der Werkzeugmaschine an die numerische Steuerung der Werkzeugmaschine bereitzustellen.

15. Vorrichtung nach einem der vorangegangenen Ansprüche, wobei die Verarbeitungseinheit (150, 1150, 1250) dazu eingerichtet ist, unter Benutzung eines Referenzwerkzeugs einen proportionale Signale umfassenden Signalverlauf bei definierten Spindeldrehzahlen zu ermitteln, und den Signalverlauf über eine Rundlaufanalyse, Frequenzanalyse, Analyse von Crestfaktoren, Einzelimpulsen und/oder quadratischen Mittel-, RMS-, Leistungswerten auszuwerten und Kennzahlen bezüglich eines Zustands einer Spindel und/oder eines Spindellagers des Referenzwerkzeugs an die numerische Steuerung der Werkzeugmaschine bereitzustellen.

16. Vorrichtung nach einem der vorangegangen Ansprüche, wobei die Verarbeitungseinheit (150, 1150, 1250) dazu eingerichtet ist, zum Bestimmen der Nutzsignalanteile eine Autokorrelationsfunktion auf die empfangenen Signale anzuwenden.

17. Vorrichtung nach einem der Ansprüche 1 bis 16, wobei die Verarbeitungseinheit (150, 1150, 1250) dazu eingerichtet ist, basierend auf einer Eintauchgeschwindigkeit, einer Eintauchrichtung, einer Eintauchtiefe, einer Abschattungsschwelle, einer Abschattungszeit pro Schneide, einer Drehzahl, einer Schneidenanzahl, einer Raumfeuchtigkeit, einer Periodendauer einer Umdrehung, einer Periodizität des empfangenen Signals, einer Position und/oder eines Werkzeugtyps des drehantreibbaren Werkzeugs den Nutzsignalanteil zu bestimmen und eine Information über den Nutzsignalanteil an die numerische Steuerung der Werkzeugmaschine bereitzustellen.

18. Vorrichtung nach Anspruch 1,
wobei die Lichtschrankenanordnung (110) weiter umfasst:
eine erste Digital-Schnittstelle (1140), die zum Senden von Statusinformationen der Lichtschrankenanordnung (110) an die Verarbeitungseinheit (1150) und Empfangen von Steuersignalen von der Verarbeitungseinheit (1150) eingerichtet ist;
eine Tiefpassfilter-Einheit (1110), die zum Filtern von Frequenzanteilen der analogen Signale, die höher als eine vorbestimmte Grenzfrequenz sind, eingerichtet ist;
eine Umwandel-Einheit (1120), die zum Umwandeln der gefilterten analogen Signale in proportionale gefilterte digitale Signale eingerichtet ist;
eine zweite Digital-Schnittstelle (1130), die zum Senden der gefilterten digitalen Signale an die Verarbeitungseinheit (1150) eingerichtet ist.

19. Vorrichtung nach Anspruch 18, wobei eine Abtastrate der Digital-Schnittstelle (1140) zum Abtasten des gefilterten analogen Signals an eine Eintauchgeschwindigkeit, eine Eintauchrichtung, eine Eintauchtiefe, eine Abschattungsschwelle, eine Abschattungszeit pro Schneide, eine Drehzahl und/oder eine Schneidenanzahl des drehantreibbaren Werkzeugs einstellbar ist.

20. Vorrichtung nach Anspruch 1,
wobei die Lichtschrankenanordnung (110) weiter umfasst:
eine Digital-Schnittstelle (1240), die zum Senden von Statusinformationen der Lichtschrankenanordnung (110) an die Verarbeitungseinheit (1250) und Empfangen von Steuersignalen von der Verarbeitungseinheit (1250) eingerichtet ist;
eine Analog-Schnittstelle (1230), die parallel zu der Digital-Schnittstelle geschaltet ist, die zum Senden der analogen Signale an eine Tiefpassfilter-Einheit (1210) der Verarbeitungseinheit (1250) und Empfangen von Steuersignalen von derselben eingerichtet ist;
wobei die Tiefpassfilter-Einheit zum Filtern von Frequenzanteilen der analogen Signale, die höher als eine vorbestimmte Grenzfrequenz sind, und Senden der gefilterten analogen Signale an eine Umwandel-Einheit (1220) der Verarbeitungseinheit (1250) eingerichtet ist;
wobei die Umwandel-Einheit zum Umwandeln der gefilterten analogen Signale in proportionale gefilterte digitale Signale, Senden der gefilterten digitalen Signale an die Verarbeitungseinheit (1250) und Empfangen von Steuersignalen von der Verarbeitungseinheit (1250) eingerichtet ist.

21. Vorrichtung nach Anspruch 20, wobei eine Abtastrate der Digital-Schnittstelle (1240) und/oder der Umwandel-Einheit (1220) zum Abtasten des analogen Signals an eine Eintauchgeschwindigkeit, eine Eintauchrichtung, eine Eintauchtiefe, eine Abschattungsschwelle, eine Abschattungszeit pro Schneide, eine Drehzahl und/oder eine Schneidenanzahl des drehantreibbaren Werkzeugs einstellbar ist.

22. Werkzeugmaschine, umfassend eine Vorrichtung nach einem der Ansprüche 1 bis 21.

23. Verfahren (500) zum Messen und Kontrollieren eines drehantreibbaren Werkzeugs (160) mittels einer Vorrichtung, umfassend eine Verarbeitungseinheit (150, 1150, 1250) zum Messen und Kontrollieren des drehantreibbaren Werkzeugs (160), und eine mit der Verarbeitungseinheit verbundene Lichtschrankenanordnung (110), die eine Lichtsende-Einheit (120) und eine Lichtempfangs-Einheit (130) umfasst, wobei das Verfahren die Schritte umfasst:
- Erfassen (510) einer durch das drehantreibbare Werkzeug und/oder wenigstens eine Schneide (180) des drehantreibbaren Werkzeugs erzeugten Abschattung an einer ersten Messposition mittels der Lichtschrankenanordnung (110);
- Erzeugen (520) zu der erzeugten Abschattung wenigstens annähernd propor-tionaler Signale mittels der Lichtempfangs-Einheit (130);
- wiederholtes Bestimmen (530) eines Nutzsignalanteils aus dem empfangenen Signal mittels der Verarbeitungseinheit (150, 1150, 1250);
- Überlagern der wiederholt bestimmten Nutzsignalanteile;
- Anwenden eines Blockfilters auf die überlagerten Nutzsignalanteile und Bestimmen eines repräsentativen Werts für die Nutzsignalanteile basierend auf den überlagerten Nutzsignalanteilen;
- Bereitstellen einer Information über den zuvor bestimmten repräsentativen Wert für Nutzsignalanteile an eine numerische Steuerung einer Werkzeugmaschine (170);
- Bestimmen einer Form und/oder einer Länge und/oder der Schneidenzahl des drehantreibbaren Werkzeugs (160) basierend auf dem repräsentativen Wert für die Nutzsignalanteile und/oder Bestimmen einer Form und/oder einer Länge der wenigstens einen Schneide (180) basierend auf dem repräsentativen Wert für die Nutzsignalanteile;
- Bereitstellen einer Information über die zuvor bestimmte Form und/oder Länge und/oder der Schneidenzahl des drehantreibbaren Werkzeugs (160) an die numerische Steuerung der Werkzeugmaschine (170) und/oder Bereitstellen einer Information über die zuvor bestimmte Form und/oder Länge der wenigstens einen Schneide (180) an die numerische Steuerung der Werkzeugmaschine (170).

24. Verfahren nach Anspruch 23, wobei eine Frequenz und/oder Amplitude des Signals vordefiniert sind und basierend auf der vordefinierten Frequenz und/oder Amplitude der der Nutzsignalanteil bestimmt wird.

25. Verfahren nach Anspruch 23, weiter umfassend die Schritte:
- Vergleichen der wiederholt bestimmten Nutzsignalanteile;
- Bestimmen eines Messpositionsfehlers basierend auf dem Vergleich der wiederholt bestimmten Nutzsignalanteile;
- Bestimmen einer zweiten Messposition basierend auf dem Messpositionsfehler;
- Erzeugen eines zu dem durch drehantreibbare Werkzeug und/oder die wenigstens eine Schneide des drehantreibbaren Werkzeugs erzeugten Abschattung zumindest annähernd proportionalen Signals an der zweiten Messposition.

26. Verfahren nach Anspruch 23, wobei der Blockfilter ein Medianwertfilter, ein Minimumwertfilter, ein Maximumwertfilter, ein Mittelwertfilter oder eine Kombination dieser Filter ist.

27. Verfahren nach Anspruch 23, wobei der Schritt des Bestimmens der Form und/oder Länge des drehantreibbaren Werkzeugs und/oder der wenigstens einen Schneide weiter umfasst:
- Verwenden einer vordefinierten Kalibrierfunktion, die einen Zusammenhang zwischen einer durch das drehantreibbare Werkzeug und/oder die wenigstens eine Schneide erzeugten Abschattung und einem zugehörigen zumindest annähernd proportionalen Signal angibt.

28. Verfahren nach Anspruch 27, weiter umfassend den Schritt:
- Identifizieren des drehantreibbaren Werkzeugs durch Abgleichen der bestimmten Schneidenanzahl und/oder Form und/oder Länge des drehantreibbaren Werkzeugs mit einer vordefinierten Schneidenanzahl und/oder Form und/oder Länge bekannter Werkzeuge.

29. Verfahren nach einem der Ansprüche 23 bis 28, weiter umfassend die Schritte:
- Bestimmen einer Verunreinigung und/oder Störstelle des drehantreibbaren Werkzeugs und/oder der wenigstens einen Schneide basierend auf dem repräsentativen Wert für die Nutzsignalanteile;
mit folgenden zusätzlichen Schritt, falls eine Verunreinigung bestimmt wird:
- Bereitstellen einer Information über die Verunreinigung des drehantreibbaren Werkzeugs und/oder der wenigstens einen Schneide;
und mit folgenden zusätzlichen Schritt, falls eine Störstelle bestimmt wird:
- Bereitstellen einer Information über die Störstelle des drehantreibbaren Werkzeugs und/oder der wenigstens einen Schneide.

30. Verfahren nach Anspruch 23, weiter umfassend den Schritt:
Bestimmen einer kürzesten und einer längsten Schneide des drehantreibbaren Werkzeugs basierend auf dem repräsentativen Wert für die Nutzsignalanteile; und
Bestimmen eines Rundlauffehlers basierend auf den bestimmten kürzesten und längsten Schneiden des drehantreibbaren Werkzeugs, die repräsentativen Werte für die Nutzsignalanteile um einen vorbestimmten Wert voneinander abweichen.

31. Verfahren nach einem der Ansprüche 23 bis 30, wobei die Nutzsignalanteile mittels einer Rundlaufanalyse, Frequenzanalyse, Analyse von Crestfaktoren, Einzelimpulsen und/oder quadratischen Mittel-, RMS-, Leistungswerten ausgewertet und Kennzahlen bezüglich einem Zustand einer Spindel und/oder einer Spindellagerung der Werkzeugmaschine an die numerische Steuerung der Werkzeugmaschine bereitgestellt werden.

32. Verfahren nach einem der Ansprüche 23 bis 31, wobei unter Benutzung eines Referenzwerkzeugs ein proportionale Signale umfassender Signalverlauf bei definierten Spindeldrehzahlen ermittelt wird, der Signalverlauf über eine Rundlaufanalyse, Frequenzanalyse, Analyse von Crestfaktoren, Einzelimpulsen und/oder quadratischen Mittel-, RMS-, Leistungswerten ausgewertet und Kennzahlen bezüglich einem Zustand einer Spindel und/oder einer Spindellagerung des Referenzwerkzeugs an die numerische Steuerung der Werkzeugmaschine bereitgestellt werden.

33. Verfahren nach einem der Ansprüche 23 bis 32, wobei der Nutzsignalanteil durch Anwenden einer Autokorrelation auf die empfangenen Signale bestimmt wird.

34. Verfahren nach einem der Ansprüche 23 bis 33, wobei der Nutzsignalanteil basierend auf einer Eintauchgeschwindigkeit, einer Eintauchrichtung, einer Eintauchtiefe, einer Abschattungsschwelle, einer Abschattungszeit pro Schneide, einer Drehzahl, einer Schneidenanzahl, einer Raumfeuchtigkeit, einer Periodendauer einer Umdrehung, einer Periodizität des empfangenen Signals, einer Position und/oder eines Werkzeugtyps des drehantreibbaren Werkzeugs bestimmt und die Information über den Nutzsignalanteil als eine Information an die numerische Steuerung der Werkzeugmaschine bereitgestellt wird.

## Claims

1. A device comprising a processing unit (150, 1150, 1250) for measuring and controlling a rotary-driven tool (160), and a light barrier arrangement (110) connected to the processing unit, which comprises a light-transmitting unit (120) and a light-receiving unit (130), wherein the processing unit is configured to receive signals that are at least approximately proportional to shading generated by the rotary-driven tool (160) and/or by at least one cutting edge (180) of the rotary-driven tool at a first measuring position;
wherein the processing unit (150, 1150, 1250) is configured to evaluate the received signals and to transmit control signals to the light barrier arrangement (110), wherein the processing unit (150, 1150, 1250) is arranged for evaluating the received signals to perform the following steps:
- repeatedly determining a useful signal component of the received signal;
- superimposing the repeatedly determined useful signal components;
- applying a block filter to the superimposed useful signal components and determining a representative value for the useful signal components based on the superimposed useful signal components;
- providing information about the previously determined representative value for useful signal components to a numerical control of a machine tool (170);
- determining a shape and/or a length and/or a number of cutting edges of the rotary-driven tool (160) based on the representative value for the useful signal components and/or determining a shape and/or a length of the at least one cutting edge (180) based on the representative value for the useful signal components;
- providing information about the previously determined shape and/or length and/or the number of cutting edges of the rotary-driven tool (160) to the numerical control of the machine tool (170) and/or provision of information about the previously determined shape and/or length of the at least one cutting edge (180) to the numerical control of the machine tool (170).

2. The device according to Claim 1, wherein a frequency and/or amplitude of the signal is predefined, wherein the processing unit (150, 1150, 1250) is configured to determine the useful signal component based on the predefined frequency and/or amplitude.

3. The device according to Claim 1, wherein the processing unit (150, 1150, 1250) is configured to compare the repeatedly determined useful signal components with one another and to determine a measuring position based on the comparison, wherein the processing unit (150, 1150, 1250) is configured to determine a second measuring position based on the measuring position error, wherein the light-receiving unit generates a signal that is at least approximately proportional to the shading generated by the rotary-driven tool (160) and/or the at least one cutting edge (180) of the rotary-driven tool (160) at the second measuring position.

4. The device according to Claim 1, wherein the block filter is a median value filter, a minimum value filter, a maximum value filter, a mean value filter or a combination of these filters.

5. The device according to claim 1, wherein the processing unit (150, 1150, 1250) is arranged to access a predefined calibration function for determining the shape and/or the length, which calibration function indicates a relationship between a shading generated by the rotary-driven tool (160) and/or the at least one cutting edge (180) and an associated at least approximately proportional signal.

6. The device according to claim 1, wherein the processing unit (150, 1150, 1250) is configured to carry out a tool identification based on the determined number of cutting edges and/or shape and/or length of the rotary-driven tool (160) by comparing the determined number of cutting edges and/or shape and/or length with a predefined number of cutting edges and/or shape and/or length of known tools.

7. The device according to Claim 1, wherein the processing unit (150, 1150, 1250) is configured to determine a local maximum of the shading of the rotary-driven tool (160) and/or of the at least one cutting edge (180), in order to determine a length of the rotary-driven tool (160) and/or of the at least one cutting edge (180) by using the predefined calibration function and to provide information about the length of the rotary-driven tool and/or the at least one cutting edge to the numerical controller of the machine tool (170).

8. The device according to claim 7, wherein the processing unit (150, 1150, 1250) is arranged to determine one or more symmetrical or approximately symmetrical signal ranges of the representative value for the useful signal components, to fit the one or more symmetrical or approximately symmetrical signal range or signal ranges with a sinusoidal regression, a polynomial regression, a Gaussian regression and/or an exponential smoothing and to determine a local maximum in the signal range or signal ranges fitted with a sinusoidal regression, a polynomial regression, a Gaussian regression and/or an exponential smoothing.

9. The device according to Claim 8, wherein the processing unit (150, 1150, 1250) is configured to determine the local maximum by means of peak value detection.

10. The device according to one of the previous claims, wherein the processing unit (150, 1150, 1250) is set up to determine a contamination and/or an interference point of the rotary-driven tool (160) or of the at least one cutting edge (180) based on the representative value for the useful signal component,
wherein, if the processing unit (150, 1150, 1250) determines a contamination, the processing unit is further arranged to provide information about a cleaning signal for cleaning the contaminated rotary-driven tool (160) and/or the at least one cutting edge (180) to the numerical control of the machine tool (170),
wherein, if the processing unit (150, 1150, 1250) determines a interference point, the processing unit (150, 1150, 1250) is further arranged to provide information about a warning signal to the numerical control of the machine tool (170).

11. The device according to any one of the previous Claims, wherein the rotary-driven tool (160) has a plurality of cutting edges, which generate shadings of the light beam, wherein the light-receiving unit generates for each of the shadings an at least approximately proportional signal reproducing this.

12. The device according to claim 1, wherein the processing unit (150, 1150, 1250) is arranged to identify a shortest and a longest cutting edge based on the representative value for the useful signal components and to provide information about the identified shortest and longest cutting edge to the numerical control of the machine tool.

13. The device according to Claim 12, wherein the processing unit is configured to determine a concentricity error of the rotary-driven tool based on the identified shortest and longest cutting edge.

14. The device according to any one of the previous Claims, wherein the processing unit (150, 1150, 1250) is configured to evaluate the useful signal components and/or the received signals via a concentricity analysis, frequency analysis, analysis of crest factors, single pulses and/or root mean square, RMS, power values and to provide key figures with regard to a state of a spindle and/or a spindle bearing of the machine tool to the numerical controller of the machine tool.

15. The device according to any one of the previous Claims, wherein the processing unit (150, 1150, 1250) is configured to determine, using a reference tool, a signal curve comprising proportional signals at defined spindle speeds, and to evaluate the signal curve via a concentricity analysis, frequency analysis, analysis of crest factors, single pulses and/or root mean square, RMS, power values and to provide key figures with regard to a state of a spindle and/or of a spindle bearing of the reference tool to the numerical controller of the machine tool.

16. The device according to any one of the previous Claims, wherein the processing unit (150, 1150, 1250) is configured to apply an autocorrelation function to the received signals for determining the useful signal components.

17. The device according to any one of the Claims 1 to 16, wherein the processing unit (150, 1150, 1250) is configured to the useful signal component based on an interruption rate, an interruption direction, an interruption depth, a shading threshold, a shading time per cutting edge, a speed, a number of cutting edges, an ambient air humidity, a period duration of a revolution, a periodicity of the received signal, a position and/or a tool type of the rotary-driven tool and to provide information about the useful signal component to the numerical controller of the machine tool.

18. The device according to claim 1,
wherein the light barrier arrangement (110) further comprises:
a first digital interface (1140), which is configured to transmit status information of the light barrier arrangement (110) to the processing unit (1150) and receive control signals from the processing unit (1150);
a low-pass filter unit (1110), which is configured to filter frequency components of the analog signals that are higher than a predetermined limit frequency;
a conversion unit (1120), which is configured to convert the filtered analog signals into proportional filtered digital signals;
a second digital interface (1130), which is configured to transmit the filtered digital signals to the processing unit (1150).

19. The device according to Claim 18, wherein a sampling rate of the digital interface (1140) for sampling the filtered analog signal can be set to an interruption rate, an interruption direction, an interruption depth, a shading threshold, a shading time per cutting edge, a speed and/or a number of cutting edges of the rotary-driven tool.

20. The device according to claim 1; wherein the light barrier arrangement (110) further comprises:
a digital interface (1240), which is configured to transmit status information of the light barrier arrangement (110) to the processing unit (1250) and receive control signals from the processing unit (1250);
an analog interface (1230), which is connected parallel to the digital interface, which is configured to transmit the analog signals to a low-pass filter unit (1210) of the processing unit (1250) and receive control signals from the same;
wherein the low-pass filter unit is configured to filter frequency components of the analog signals that are higher than a predetermined limit frequency, and to transmit the filtered analog signals to a conversion unit (1220) of the processing unit (1250);
wherein the conversion unit is configured to convert the filtered analog signals into proportional filtered digital signals, transmit the filtered digital signals to the processing unit (1250) and receive control signals from the processing unit (1250).

21. The device according to Claim 20, wherein a sampling rate of the digital interface (1240) and/or the conversion unit (1220) for sampling the analog signal can be set to an interruption rate, an interruption direction, an interruption depth, a shading threshold, a shading time per cutting edge, a speed and/or a number of cutting edges of the rotary-driven tool.

22. A machine tool, comprising a device according to any one of Claims 1 to 21.

23. A method (500) of measuring and controlling a rotary-driven tool (160) by means of an device comprising a processing unit (150, 1150, 1250) for measuring and controlling the rotary-driven tool (160), and a light barrier arrangement (110) connected to the processing unit and comprising a light transmitting unit (120) and a light receiving unit (130), the method comprising the steps of:
- registration (510) of shading generated by the rotary-driven tool and/or at least one cutting edge (180) of the rotary-driven tool at a first measuring position by means of the light barrier arrangement (110);
- generation (520) of at least approximately proportional to the generated shading by means of the light receiving unit (130);
- repeatedly determining (530) a useful signal component from the received signal by means of the processing unit (150, 1150, 1250);
- superimposing the repeatedly determined useful signal components;
- applying a block filter to the superimposed useful signal components and determining a representative value for the useful signal components based on the superimposed useful signal components;
- providing information about the previously determined representative value for the useful signal components to the numerical control of the machine tool (170);
- determining a shape and/or a length and/or the number of cutting edges of the rotary-driven tool (160) based on the representative value for the useful signal components and/or determining a shape and/or a length of the at least one cutting edge (180) based on the representative value for the useful signal components
- providing information about the previously determined shape and/or length and/or the number of cutting edges of the rotary-driven tool (160) to the numerical control of the machine tool (170) and/or provision of information about the previously determined shape and/or length of the at least one cutting edge (180) to the numerical control of the machine tool (170).

24. The method according to Claim 23, wherein a frequency and/or amplitude of the signal are predefined and the useful signal component are determined based on the predefined frequency and/or amplitude.

25. The method according to Claim 23, further comprising the steps:
- comparison of the repeatedly determined useful signal components;
- determination of a measuring position error based on the comparison of the repeatedly determined useful signal components;
- determination of a second measuring position based on the measuring position error;
- generation of an at least approximately proportional signal to the shading generated by the rotary-driven tool and/or the at least one cutting edge of the rotary-driven tool at the second measuring position.

26. The method according to Claim 23, wherein the block filter is a median value filter, a minimum value filter, a maximum value filter, a mean value filter or a combination of these filters.

27. The method according to Claim 23, wherein the step of determining the form and/or length of the rotary-driven tool and/or of the at least one cutting edge further comprises:
- use of a predefined calibration function, which specifies a connection between shading generated by the rotary-driven tool and/or the at least one cutting edge and an associated, at least approximately proportional signal.

28. The method according to Claim 27, further comprising the step:
- identification of the rotary-driven tool by comparison of the determined number of cutting edges and/or form and/or length of the rotary-driven tool with a predefined number of cutting edges and/or form and/or length of known tools.

29. The method according to any one of Claims 23 to 28, further comprising the steps:
- determining a contamination and/or interference point of the rotary-driven tool and/or the at least one cutting edge based on the representative value for the useful signal components;
with the following additional step if contamination is detected:
- providing information about the contamination of the rotary-driven tool and/or the at least one cutting edge;
and with the following additional step if an interference point is determined:
- providing information about the interference point of the rotary-driven tool and/or the at least one cutting edge.

30. The method according to Claim 23, further comprising the step:
- determining a shortest and a longest cutting edge of the rotary-driven tool based on the representative value for the useful signal components; and
- determining a concentricity error based on the determined shortest and longest cutting edges of the rotary-driven tool, the representative values for the useful signal components deviate from each other by a predetermined value.

31. The method according to one of claims 23 to 30, wherein the useful signal components are evaluated by means of a concentricity analysis, frequency analysis, analysis of crest factors, individual pulses and/or root mean square, RMS, power values and key figures relating to a state of a spindle and/or a spindle bearing of the machine tool are provided to the numerical control of the machine tool.

32. The method according to any one of Claims 23 to 31, wherein, using a reference tool, a signal curve comprising proportional signals at defined spindle speeds is determined, the signal curve is evaluated via a concentricity analysis, frequency analysis, analysis of crest factors, single pulses and/or root mean square, RMS, power values and key figures with regard to a state of a spindle and/or of a spindle bearing of the reference tool are provided to the numerical controller of the machine tool.

33. The method according to any one of claims 23 to 32, wherein the useful signal portion is determined by applying an autocorrelation to the received signals.

34. The method according to any one of Claims 23 to 33, wherein the useful signal component is determined based on an interruption rate, an interruption direction, an interruption depth, a shading threshold, a shading time per cutting edge, a speed, a number of cutting edges, an ambient air humidity, a period duration of a revolution, a periodicity of the received signal, a position and/or a tool type of the rotary-driven tool and the information about the useful signal component is provided as information to the numerical controller of the machine tool.

## Revendications

1. Dispositif comprenant une unité de traitement (150, 1150, 1250) pour mesurer et contrôler un outil (160) pouvant être entraîné en rotation, et un agencement de barrière lumineuse (110) relié à l'unité de traitement, qui comprend une unité d'émission de lumière (120) et une unité de réception de lumière (130), l'unité de traitement étant conçue pour recevoir de l'unité de réception de lumière (130), à une première position de mesure, des signaux au moins approximativement proportionnels à une ombre produite par l'outil (160) pouvant être entraîné en rotation et/ou au moins un tranchant (180) de l'outil pouvant être entraîné en rotation ;
l'unité de traitement (150, 1150, 1250) étant agencée pour évaluer les signaux reçus et pour envoyer des signaux de commande à l'agencement de barrières lumineuses (110), l'unité de traitement (150, 1150, 1250) étant agencée pour évaluer les signaux reçus afin d'exécuter les étapes suivantes :
- détermination répétée d'une partie du signal utile du signal reçu ;
- Superposition des composantes du signal utile déterminées de manière répétée ;
- l'application d'un filtre de bloc aux composantes de signal utiles superposées et la détermination d'une valeur représentative pour les composantes de signal utiles sur la base des composantes de signal utiles superposées ;
- fournir à une commande numérique d'une machine-outil (170) une information sur la valeur représentative précédemment déterminée pour des composantes de signal utiles ;
- déterminer une forme et/ou une longueur et/ou un nombre de tranchants de l'outil pouvant être entraîné en rotation (160) sur la base de la valeur représentative pour les composantes de signal utiles et/ou déterminer une forme et/ou une longueur du au moins un tranchant (180) sur la base de la valeur représentative pour les composantes de signal utiles ;
- fournir à la commande numérique de la machine-outil (170) une information sur la forme et/ou la longueur et/ou le nombre de tranchants de l'outil (160) pouvant être entraîné en rotation, déterminés au préalable, et/ou fournir à la commande numérique de la machine-outil (170) une information sur la forme et/ou la longueur, déterminées au préalable, du au moins un tranchant (180).

2. Dispositif selon la revendication 1, dans lequel une fréquence et/ou une amplitude du signal sont prédéfinies, l'unité de traitement (150, 1150, 1250) étant agencée pour déterminer la composante de signal utile sur la base de la fréquence et/ou de l'amplitude prédéfinie.

3. Dispositif selon la revendication 1, dans lequel l'unité de traitement (150, 1150, 1250) est agencée pour comparer entre elles les composantes de signal utile déterminées de manière répétée et pour déterminer une erreur de position de mesure sur la base de la comparaison, l'unité de traitement (150, 1150, 1250) étant agencée pour, déterminer une deuxième position de mesure sur la base de l'erreur de position de mesure, l'unité de réception de lumière générant un signal au moins approximativement proportionnel à l'ombre produite par l'outil (160) pouvant être entraîné en rotation et/ou par l'au moins un tranchant (180) de l'outil (160) pouvant être entraîné en rotation, à la deuxième position de mesure.

4. Dispositif selon la revendication 1, dans lequel le filtre en bloc est un filtre de valeur médiane, un filtre de valeur minimale, un filtre de valeur maximale, un filtre de valeur moyenne ou une combinaison de ces filtres.

5. Dispositif selon la revendication 1, dans lequel l'unité de traitement (150, 1150, 1250) est agencée pour accéder à une fonction d'étalonnage prédéfinie pour déterminer la forme et/ou la longueur, laquelle fonction d'étalonnage indique une relation entre une ombre générée par l'outil (160) pouvant être entraîné en rotation et/ou la au moins une lame (180) et un signal au moins approximativement proportionnel associé.

6. Dispositif selon la revendication 1, dans lequel l'unité de traitement (150, 1150, 1250) est agencée pour effectuer, sur la base du nombre de tranchants et/ou de la forme et/ou de la longueur déterminés de l'outil (160) pouvant être entra né en rotation, une identification d'outil en comparant le nombre de tranchants et/ou la forme et/ou la longueur déterminés à un nombre de tranchants et/ou une forme et/ou une longueur prédéfinis d'outils connus.

7. Dispositif selon la revendication 1, dans lequel l'unité de traitement est adaptée pour (150, 1150, 1250) déterminer un maximum local de l'ombre de l'outil pouvant être entra né en rotation (160) et/ou de la au moins une lame (180) pour déterminer une longueur de l'outil pouvant être entra né en rotation (160) et/ou de la au moins une lame (180) en utilisant la fonction de calibrage prédéfinie, et pour fournir une information sur la longueur de l'outil pouvant être entra né en rotation et/ou de la au moins une lame à la commande numérique de la machine-outil (170).

8. Dispositif selon la revendication 7, dans lequel l'unité de traitement est agencée (150, 1150, 1250) pour déterminer une ou plusieurs plages de signal symétriques ou approximativement symétriques de la valeur représentative pour les composantes de signal utiles, pour traiter la ou les plages de signal symétriques ou approximativement symétriques avec une régression sinusoïdale, d'une régression polynomiale, d'une régression gaussienne et/ou d'un lissage exponentiel et de déterminer un maximum local dans la plage ou les plages de signaux ajustées par une régression sinusoïdale, une régression polynomiale, une régression gaussienne et/ou un lissage exponentiel.

9. Dispositif selon la revendication 8, dans lequel l'unité de traitement (150, 1150, 1250) est adaptée pour déterminer le maximum local par détection de crête.

10. Dispositif selon l'une quelconque des revendications précédentes, dans lequel l'unité de traitement (150, 1150, 1250) est agencée pour déterminer, sur la base de la valeur représentative de la composante de signal utile, une contamination et/ou un point de défaillance de l'outil (160) pouvant être entraîné en rotation ou de l'au moins une lame (180),
dans lequel, si l'unité de traitement (150, 1150, 1250) détermine une contamination, l'unité de traitement est en outre adaptée pour fournir à la commande numérique de la machine-outil (170) des informations sur un signal de nettoyage pour nettoyer l'outil rotatif (160) et/ou la au moins une lame (180) contaminés,
dans lequel, si l'unité de traitement (150, 1150, 1250) détermine un point de défaillance, l'unité de traitement (150, 1150, 1250) est en outre adaptée pour fournir une information sur un signal d'avertissement à la commande numérique de la machine-outil (170).

11. Dispositif selon l'une quelconque des revendications précédentes, dans lequel l'outil (160) apte à être entraîné en rotation comporte une pluralité d'arêtes de coupe qui produisent des occultations du faisceau lumineux, l'unité de réception de lumière produisant, pour chacune des occultations, un signal au moins approximativement proportionnel à celle-ci.

12. Dispositif selon la revendication 1, dans lequel l'unité de traitement (150, 1150, 1250) est agencée pour identifier une arête de coupe la plus courte et une arête de coupe la plus longue sur la base de la valeur représentative pour les composantés de signal utiles et pour fournir des informations sur l'arête de coupe la plus courte et l'arête de coupe la plus longue identifiées à la commande numérique de la machine-outil.

13. Dispositif selon la revendication 12, dans lequel l'unité de traitement est agencée pour déterminer une erreur de concentricité de l'outil pouvant être entra né en rotation sur la base du tranchant le plus court et du tranchant le plus long identifiés.

14. Dispositif selon l'une des revendications précédentes, dans lequel l'unité de traitement (150, 1150, 1250) est agencée pour évaluer les composantes de signal utiles au moyen d'une analyse de rotation, d'une analyse de fréquence, d'une analyse de facteurs de crête, d'impulsions individuelles et/ou de valeurs moyennes quadratiques, de valeurs RMS, de valeurs de puissance et pour fournir des indices concernant un état d'une broche et/ou d'un palier de broche de la machine-outil à la commande numérique de la machine-outil.

15. Dispositif selon l'une des revendications précédentes, dans lequel l'unité de traitement (150, 1150, 1250) est conçue pour déterminer, en utilisant un outil de référence, une courbe de signal comprenant des signaux proportionnels pour des vitesses de rotation de broche définies, et pour évaluer la courbe de signal par une analyse de concentricité, une analyse de fréquence, une analyse de facteurs de crête, d'impulsions individuelles et/ou de valeurs moyennes quadratiques, de valeurs RMS, de valeurs de puissance, et pour mettre à disposition de la commande numérique de la machine-outil des indices concernant un état d'une broche et/ou d'un palier de broche de l'outil de référence.

16. Dispositif selon l'une quelconque des revendications précédentes, dans lequel l'unité de traitement (150, 1150, 1250) est agencée pour appliquer une fonction d'autocorrélation aux signaux reçus pour déterminer les composantes du signal utile.

17. Dispositif selon l'une des revendications 1 à 16, dans lequel l'unité de traitement (150, 1150, 1250) est adaptée pour déterminer, sur la base d'une vitesse de plongée, d'une direction de plongée, d'une profondeur de plongée, d'un seuil d'occultation, d'un temps d'occultation par lame, d'une vitesse de rotation, d'un nombre de lames, d'une humidité ambiante, d'une durée de période d'une rotation, d'une périodicité du signal reçu, d'une position et/ou d'un type d'outil de l'outil pouvant être entraîné en rotation, et de mettre à disposition une information sur la part de signal utile à la commande numérique de la machine-outil.

18. Dispositif selon la revendication 1,
l'ensemble de cellules photoélectriques (110) comprenant en outre
une première interface numérique (1140) adaptée pour envoyer des informations d'état de l'ensemble de cellules photoélectriques (110) à l'unité de traitement (1150) et pour recevoir des signaux de commande de l'unité de traitement (1150) ;
une unité de filtre passe-bas (1110) agencée pour filtrer les composantes de fréquence des signaux analogiques qui sont supérieures à une fréquence de coupure prédéterminée ;
une unité de conversion (1120) adaptée pour convertir les signaux analogiques filtrés en signaux numériques filtrés proportionnels ;
une deuxième interface numérique (1130) agencée pour envoyer les signaux numériques filtrés à l'unité de traitement (1150).

19. Dispositif selon la revendication 18, dans lequel une fréquence d'échantillonnage de l'interface numérique (1140) pour échantillonner le signal analogique filtré est réglable en fonction d'une vitesse de plongée, d'une direction de plongée, d'une profondeur de plongée, d'un seuil d'occultation, d'un temps d'occultation par arête, d'une vitesse de rotation et/ou d'un nombre d'arêtes de l'outil pouvant être entraîné en rotation.

20. Dispositif selon la revendication 1,
l'ensemble de cellules photoélectriques (110) comprenant en outre
une interface numérique (1240) adaptée pour envoyer des informations d'état de l'ensemble de cellules photoélectriques (110) à l'unité de traitement (1250) et pour recevoir des signaux de commande de l'unité de traitement (1250) ;
une interface analogique (1230) connectée en parallèle à l'interface numérique, qui est adaptée pour envoyer les signaux analogiques à une unité de filtre passe-bas (1210) de l'unité de traitement (1250) et pour recevoir des signaux de commande de celle-ci ;
dans lequel l'unité de filtre passe-bas est adaptée pour filtrer des parties de fréquence des signaux analogiques qui sont supérieures à une fréquence de coupure prédéterminée et pour envoyer les signaux analogiques filtrés à une unité de conversion (1220) de l'unité de traitement (1250) ;
dans lequel l'unité de conversion est agencée pour convertir les signaux analogiques filtrés en signaux numériques filtrés proportionnels, envoyer les signaux numériques filtrés à l'unité de traitement (1250) et recevoir des signaux de commande de l'unité de traitement (1250).

21. Dispositif selon la revendication 20, dans lequel une fréquence d'échantillonnage de l'interface numérique (1240) et/ou de l'unité de conversion (1220) pour échantillonner le signal analogique est réglable en fonction d'une vitesse de plongée, d'une direction de plongée, d'une profondeur de plongée, d'un seuil d'occultation, d'un temps d'occultation par arête, d'une vitesse de rotation et/ou d'un nombre d'arêtes de l'outil pouvant être entraîné en rotation.

22. Machine-outil comprenant un dispositif selon l'une des revendications 1 à 21.

23. Procédé (500) de mesure et de contrôle d'un outil (160) pouvant être entraîné en rotation au moyen d'un dispositif comprenant une unité de traitement (150, 1150, 1250) pour mesurer et contrôler l'outil (160) pouvant être entraîné en rotation, et un agencement de barrière photoélectrique (110) connecté à l'unité de traitement et comprenant une unité d'émission de lumière (120) et une unité de réception de lumière (130), le procédé comprenant les étapes comprenant:
- détecter (510) d'une ombre générée par l'outil pouvant être entraîné en rotation et/ou au moins un tranchant (180) de l'outil pouvant être entraîné en rotation à une première position de mesure au moyen du dispositif de barrière lumineuse (110);
- générer (520) des signaux au moins approximativement proportionnels à l'occultation générée au moyen de l'unité de réception de lumière (130) ;
- la détermination répétée (530) d'une partie de signal utile à partir du signal reçu au moyen de l'unité de traitement (150, 1150, 1250) ;
- superposer des composantes du signal utile déterminées de manière répétée ;
- l'application d'un filtre de bloc aux composantes de signal utiles superposées et la détermination d'une valeur représentative pour les composantes de signal utiles sur la base des composantes de signal utiles superposées ;
- fournir à une commande numérique d'une machine-outil (170) une information sur la valeur représentative précédemment déterminée pour des composantes de signal utiles ;
- déterminer une forme et/ou une longueur et/ou le nombre de tranchants de l'outil pouvant être entraîné en rotation (160) sur la base de la valeur représentative pour les composantes de signal utiles et/ou déterminer une forme et/ou une longueur du au moins un tranchant (180) sur la base de la valeur représentative pour les composantes de signal utiles ;
- fournir à la commande numérique de la machine-outil (170) une information sur la forme et/ou la longueur et/ou le nombre de tranchants de l'outil (160) pouvant être entraîné en rotation, déterminés au préalable, et/ou fournir à la commande numérique de la machine-outil (170) une information sur la forme et/ou la longueur, déterminées au préalable, du au moins un tranchant (180).

24. Procédé selon la revendication 23, dans lequel une fréquence et/ou une amplitude du signal sont prédéfinies et la composante de signal utile est déterminée sur la base de la fréquence et/ou de l'amplitude prédéfinie.

25. procédé selon la revendication 23, comprenant en outre les étapes comprenant:
- Comparaison des composantes du signal utile déterminées de manière répétée;
- Détermination d'une erreur de position de mesure basée sur la comparaison des composantes du signal utile déterminées de manière répétée ;
- Déterminer une deuxième position de mesure sur la base de l'erreur de position de mesure ;
- générer, à la deuxième position de mesure, un signal au moins approximativement proportionnel à l'ombre générée par l'outil pouvant être entraîné en rotation et/ou la au moins une lame de l'outil pouvant être entraîné en rotation.

26. Procédé selon la revendication 23, dans lequel le filtre en bloc est un filtre de valeur médiane, un filtre de valeur minimale, un filtre de valeur maximale, un filtre de valeur moyenne ou une combinaison de ces filtres.

27. Procédé selon la revendication 23, dans lequel l'étape de détermination de la forme et/ou de la longueur de l'outil pouvant être entra né en rotation et/ou de la au moins une lame comprend en outre :
- l'utilisation d'une fonction d'étalonnage prédéfinie indiquant une relation entre une ombre produite par l'outil pouvant être entraîné en rotation et/ou l'au moins une lame et un signal associé au moins approximativement proportionnel.

28. Procédé selon la revendication 27, comprenant en outre l'étape comprenant
- identifier l'outil pouvant être entraîné en rotation en faisant correspondre le nombre de tranchants et/ou la forme et/ou la longueur déterminés de l'outil pouvant être entraîné en rotation à un nombre de tranchants et/ou une forme et/ou une longueur prédéfinis d'outils connus.

29. Procédé selon l'une quelconque des revendications 23 à 28, comprenant en outre les étapes comprenant:
- déterminer une contamination et/ou un point de défaillance de l'outil pouvant être entraîné en rotation et/ou de la au moins une arête de coupe sur la base de la valeur représentative pour les composantes du signal utile ;
avec l'étape supplémentaire suivante si une impureté est déterminée :
- fournir des informations sur la contamination de l'outil pouvant être entraîné en rotation et/ou de la au moins une lame ;
et avec l'étape supplémentaire suivante si un point de défaillance est déterminé :
- fournir une information sur le point de défaillance de l'outil pouvant être entraîné en rotation et/ou de l'au moins une lame.

30. Procédé selon la revendication 23, comprenant en outre l'étape comprenant déterminer un bord de coupe le plus court et un bord de coupe le plus long de l'outil pouvant être entraîné en rotation sur la base de la valeur représentative des composantes de signal utiles ; et
déterminer une erreur de concentricité sur la base des arêtes de coupe les plus courtes et les plus longues déterminées de l'outil pouvant être entraîné en rotation, les valeurs représentatives des composantes du signal utile s'écartant les unes des autres d'une valeur prédéterminée.

31. Procédé selon l'une des revendications 23 à 30, dans lequel les composantes de signal utiles sont évaluées au moyen d'une analyse de rotation, d'une analyse de fréquence, d'une analyse de facteurs de crête, d'impulsions individuelles et/ou de valeurs moyennes quadratiques, de valeurs RMS, de valeurs de puissance, et des caractéristiques concernant un état d'une broche et/ou d'un palier de broche de la machine-outil sont mises à disposition de la commande numérique de la machine-outil.

32. Procédé selon l'une des revendications 23 à 31, dans lequel, en utilisant un outil de référence, on détermine une courbe de signaux comprenant des signaux proportionnels pour des vitesses de rotation de broche définies, on évalue la courbe de signaux par l'intermédiaire d'une analyse de concentricité, d'une analyse de fréquence, d'une analyse de facteurs de crête, d'impulsions individuelles et/ou de valeurs moyennes, RMS, de puissance quadratiques et on met à disposition de la commande numérique de la machine-outil des caractéristiques concernant un état d'une broche et/ou d'un palier de broche de l'outil de référence

33. Procédé selon l'une quelconque des revendications 23 à 32, dans lequel la fraction de signal utile est déterminée en appliquant une autocorrélation aux signaux reçus.

34. Procédé selon l'une des revendications 23 à 33, dans lequel la composante de signal utile est déterminée sur la base d'une vitesse de plongée, d'une direction de plongée, d'une profondeur de plongée, d'un seuil d'occultation, d'un temps d'occultation par arête de coupe, d'une vitesse de rotation, d'un nombre d'arêtes de coupe, d'une humidité ambiante, d'une durée de période d'une rotation, d'une périodicité du signal reçu, d'une position et/ou d'un type d'outil de l'outil pouvant être entra né en rotation, et l'information sur la composante de signal utile est mise à disposition sous forme d'information à la commande numérique de la machine-outil.
